# EUROPEAN PATENT APPLICATION

(11) **EP 4 723 423 A1**
(43) Date of publication of application: **08.04.2026**
(21) Application number: 24814889.2
(22) Date of filing: 22.02.2024
(51) Int. Cl.: H02J 7/00

(54) **CHARGING MANAGEMENT SYSTEM AND CHARGING MANAGEMENT METHOD**

(30) Priority: 31.05.2023 WO PCT/JP2023/020348
(71) Applicant: Panasonic Intellectual Property Management Co., Ltd., Kadoma-shi, Osaka 571-0057 (JP)
(72) Inventor: KISHIKAWA, Takeshi, Kadoma-shi, Osaka 571-8501 (JP); YAMAGUCHI, Takahiro, Kadoma-shi, Osaka 571-8501 (JP); OKUNO, Mayumi, kadoma-shi, Osaka 571-0057 (JP)
(74) Representative: Grünecker Patent- und Rechtsanwälte PartG mbB
(86) International application number: PCT/JP2024/006658
(87) International publication number: WO 2024/247402

(57) **Abstract**

A charging management system according to the present disclosure includes a reception unit and a processing unit. The reception unit receives a request related to use of a charging device by a mobile body. The mobile body is capable of being charged. The processing unit performs, according to the request and a security level of the mobile body, processing related to the use of the charging device by the mobile body.

## Description

### TECHNICAL FIELD

The present disclosure relates to a charging management system and a charging management method.

### BACKGROUND ART

With the spread of mobile bodies capable of being charged, charging stations each including a plurality of charging devices are also spreading. The situation where a mobile body uses a charging device is increasing.

### CITATION LIST

### Patent Literature

Patent Document 1: JP 2010-237924 A
Patent Document 2: WO 2013/057879 A
Patent Document 3: JP 2012-147651 A
Patent Document 4: JP 2013-62918 A
Patent Document 5: WO 2022/163619 A
Patent Document 6: JP 2019-200506 A

### SUMMARY OF INVENTION

A mobile body capable of being charged may be able to communicate with the outside via a wireless communication link. When the mobile body can communicate with the outside via the wireless communication link, the convenience of the mobile body is improved. For example, it is possible to construct a charging management system for collecting and managing management information regarding security of a mobile body to a server via a wireless communication link, and the charging management system can manage charging performed by the mobile body using a charging device.

On the other hand, when the mobile body can communicate with the outside via the wireless communication link, there is a possibility that a security problem occurs on the mobile body with respect to communication access from the outside.

The present disclosure provides a charging management system and a charging management method capable of ensuring security of a mobile body.

A charging management system according to the present disclosure includes a reception unit and a processing unit. The reception unit receives a request related to use of a charging device by a mobile body. The mobile body is capable of being charged. The processing unit performs, according to the request and a security level of the mobile body, processing related to the use of the charging device by the mobile body.

### BRIEF DESCRIPTION OF DRAWINGS

FIG. 1 is a diagram illustrating a configuration of a charging management system according to an embodiment;
FIG. 2 is a diagram illustrating a configuration of a vehicle according to the embodiment;
FIG. 3 is a diagram illustrating a configuration of a central ECU according to the embodiment;
FIG. 4 is a diagram illustrating a data structure of vehicle state information according to the embodiment;
FIG. 5 is a diagram illustrating a data structure of security abnormality information according to the embodiment;
FIG. 6 is a diagram illustrating a data structure of vehicle configuration information according to the embodiment;
FIG. 7 is a diagram illustrating a configuration of an ECU according to the embodiment;
FIG. 8 is a diagram illustrating a data structure of version information according to the embodiment;
FIG. 9 is a diagram illustrating a configuration of a vehicle management server according to the embodiment;
FIG. 10 is a diagram illustrating a data structure of server access information according to the embodiment;
FIG. 11 is a diagram illustrating a data structure of vehicle information according to the embodiment;
FIG. 12 is a diagram illustrating a configuration of a station management server according to the embodiment;
FIG. 13 is a diagram illustrating a reservation schedule notified to the vehicle according to the embodiment;
FIG. 14 is a diagram illustrating a data structure of station information according to the embodiment;
FIG. 15 is a diagram illustrating a data structure of power price information according to the embodiment;
FIG. 16 is a diagram illustrating a configuration of a charging station according to the embodiment;
FIG. 17 is a diagram illustrating a configuration of a charging management system according to a first modification of the embodiment;
FIG. 18 is a diagram illustrating station information notified to a vehicle according to the first modification of the embodiment;
FIG. 19 is a sequence diagram illustrating an operation of a charging management system according to a second modification of the embodiment;
FIG. 20 is a flowchart illustrating processing of determining a security level according to the second modification of the embodiment;
FIG. 21 is a flowchart illustrating processing of searching for a station according to the second modification of the embodiment;
FIG. 22 is a flowchart illustrating processing of estimating a billing amount according to the second modification of the embodiment;
FIG. 23 is a sequence diagram illustrating an operation of a charging management system according to a third modification of the embodiment;
FIG. 24 is a diagram illustrating a configuration of a charging management system according to a fourth modification of the embodiment;
FIG. 25 is a diagram illustrating a data structure of vehicle information according to the fourth modification of the embodiment;
FIG. 26 is a flowchart illustrating schedule allocation processing according to a fifth modification of the embodiment;
FIG. 27 is a flowchart illustrating charging output adjustment processing according to a sixth modification of the embodiment;
FIG. 28 is a diagram illustrating a configuration of a charging management system according to a seventh modification of the embodiment;
FIG. 29 is a diagram illustrating a configuration of a charging management system according to an eighth modification of the embodiment; and
FIG. 30 is a diagram illustrating a configuration of a charging management system according to a ninth modification of the embodiment.

### DESCRIPTION OF EMBODIMENTS

Hereinafter, an embodiment of a charging management system according to the present disclosure will be described with reference to the drawings.

### (Embodiment)

The charging management system according to an embodiment is a system configured to manage charging of a mobile body capable of being charged such that the mobile body is charged by using a charging device. The mobile body can communicate with the outside via a wireless communication link, and accordingly, measures for ensuring security of the mobile body are taken.

Note that, in the present specification, security of the mobile body means ensuring confidentiality, integrity, and availability of information of the mobile body. The security level of the mobile body means a level of capability to ensure confidentiality, integrity, and availability of information of the mobile body. The security level of the mobile body may include a high defense capability against an external cyberattack, a high internal defense capability against an unauthorized operation of malware, and the like. Hereinafter, a vehicle will be exemplified as the mobile body.

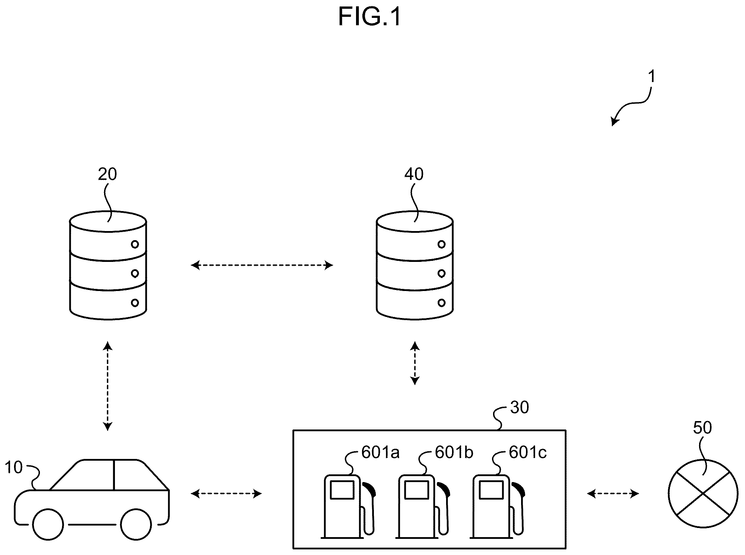

A charging management system 1 is a system for managing a charging infrastructure for a vehicle 10, and can be configured as illustrated in FIG. 1. FIG. 1 is a diagram illustrating a configuration of the charging management system 1. The charging management system 1 includes the vehicle 10, a vehicle management server 20, a charging station 30, a station management server 40, and a power distribution network 50. The charging station 30 includes a plurality of charging devices 601a to 601c. Hereinafter, each of the charging devices 601a to 601c may be simply referred to as a charging device 601 when not distinguished from each other.

In the charging management system 1, the vehicle 10 and the vehicle management server 20 are communicably connected to each other via a wireless communication link. The vehicle management server 20 and the station management server 40 are communicably connected to each other via a wireless communication link and/or a wired communication line. The station management server 40 and the charging station 30 are communicably connected to each other via the wireless communication link. The charging station 30 and the power distribution network 50 are connected to each other via a power cable so as to be able to supply power.

The wireless communication link includes a communication link using a Radio Access Technology (RAT) such as Long Term Evolution (LTE), New Radio (NR), Wi-Fi, and Bluetooth (registered trademark). The wired communication line includes the Internet, a telephone switched network, and the like.

In the charging management system 1, the vehicle management server 20 is managed by, for example, a vehicle manufacturer. The vehicle management server 20 manages a security state and the like of the vehicle 10. The station management server 40 is managed by a charging service provider or a charging owner. The station management server 40 monitors the state of the charging station 30 and gives a control instruction. Further, the station management server 40 determines a preferential treatment according to the state of the vehicle 10. The charging station 30 is connected to the power distribution network 50.

The vehicle 10 can transmit the management information to the vehicle management server 20. Upon receiving the management information regarding the security of the vehicle 10, the vehicle management server 20 determines the security level of the vehicle 10 according to the management information. The vehicle management server 20 notifies the station management server 40 of the security level of the vehicle 10. The station management server 40 determines a parameter related to charging of the vehicle 10 according to the security level of the vehicle 10. The station management server 40 may determine the parameter such that, as the security level of the vehicle 10 is higher, the vehicle 10 can use charging under advantageous conditions. The station management server 40 notifies the charging station 30 of the parameter. The charging station 30 performs processing related to use of the charging device 601 by the vehicle according to the parameter.

As a result, the charging management system 1 can provide a preferential treatment to the vehicle 10 having a high security level regarding the use of the charging device 601 and can provide an incentive to a user of the vehicle 10 so as to improve security and to encourage the user to ensure the security. As a result, the security of the vehicle 10 can be ensured when the user of the vehicle 10 takes security measures such as updating software used in the vehicle 10.

Note that the security level of the vehicle 10 can be determined by using any information related to the level of capability to ensure confidentiality, integrity, and availability of the information of the vehicle 10.

For example, the charging management system 1 may determine the security level of the vehicle 10 based on the freshness of the version of the software installed in the vehicle 10.

The charging management system 1 may determine the security level of the vehicle 10 based on whether security software is installed in the vehicle 10, whether a security monitoring service is enabled, or the like. The security monitoring service may be a security monitoring service that detects whether there is a sign of breach in an in-vehicle system. The security monitoring service includes, for example, a network intrusion detection system that protects an in-vehicle network and a host intrusion detection system that protects an in-vehicle ECU.

The charging management system 1 may determine the security level of the vehicle 10 based on information related to a breach history (that is, a security breach history) for at least one of a cyberattack received by the vehicle 10 from the outside and an internal unauthorized operation by malware in the vehicle 10. The information related to the security breach history may include the presence or absence of a security breach history, the number of security breach histories, the freshness of the security breach history (whether it has been received recently), and the like.

The charging management system 1 may determine the security level of the vehicle 10 based on the number of occurrences of security errors determined by monitoring information received by the vehicle 10 or information communicated in the vehicle 10.

In addition, as the preferential treatment to be applied to the vehicle 10 according to the security level of the vehicle 10, any measure serving as an incentive for the security measure can be considered.

For example, the charging management system 1 may make it easy to find a charging environment for the vehicle 10 according to a degree of the security level of the vehicle 10. The charging management system 1 may enable future reservation of the reservation of the charging station 30 by software of a reservation application according to the degree of the security level of the vehicle 10. The charging management system 1 may enter a use reservation queue in descending order of the security level of the vehicle 10 by software of the reservation application.

The charging management system 1 may discount a charging fee according to the degree of the security level of the vehicle 10. The charging management system 1 may reduce the estimated amount of a usage fee of the charging device 601 according to the degree of the security level of the vehicle 10. The charging management system 1 may reduce the charge amount of the usage fee of the charging device 601 according to the degree of the security level of the vehicle 10.

The charging management system 1 may increase a charging speed (or output) of the charging device 601 according to the degree of the security level of the vehicle 10, thereby saving time. The charging management system 1 may preferentially allocate the charging amount by the charging device 601 at the time of power shortage according to the degree of the security level of the vehicle 10.

In the charging management system 1, the vehicle 10 is a mobile body capable of being charged and has wheels. The vehicle 10 may be, for example, an electric vehicle (EV) type mobile body or a plug-in hybrid vehicle (PHV) type mobile body. The vehicle 10 may be a two-wheeled vehicle, a three-wheeled vehicle, a four-wheeled vehicle, or a mobile body including five or more wheels. Hereinafter, a case in which the vehicle 10 is an EV type four-wheeled vehicle will be mainly described.

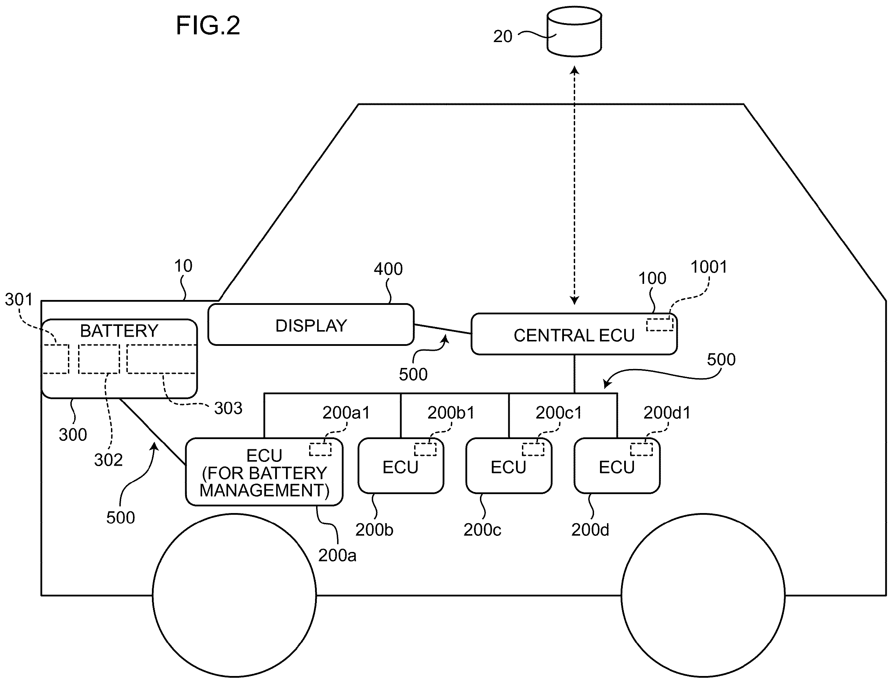

The vehicle 10 may be configured as illustrated in FIG. 2. FIG. 2 is a diagram illustrating a configuration of the vehicle 10, and illustrates a network inside the vehicle 10.

The vehicle 10 includes a battery 300, a display 400, a central electronic control unit (ECU) 100, ECUs 200a to 200d, and a vehicle network 500. The battery 300, the display 400, the central ECU 100, and the ECUs 200a to 200d are communicably connected to each other via the vehicle network 500. The vehicle network 500 may be, for example, a controller area network (CAN), Ethernet (registered trademark), a local interconnect network (LIN), or FlexRay (registered trademark).

At least one piece of software is installed in each of the central ECU 100 and the ECUs 200a to 200d. Software being installed means that the software is stored and in an executable state. A plurality of functions to be implemented by the vehicle 10 are distributed and implemented in the central ECU 100 and the ECUs 200a to 200d.

Software 1001 is installed in the central ECU 100. Software other than the software 1001 may be further installed in the central ECU 100. The central ECU 100 starts up the software 1001 in response to startup or the like of the vehicle 10. The central ECU 100 functions as a communication interface to the outside of the vehicle 10 according to the software 1001. The central ECU 100 may further have a function as a firewall for the outside of the vehicle 10. The central ECU 100 may have a function of generating information to be displayed on the display 400.

Software 200a1 is installed in the ECU 200a. In the ECU 200a, software other than the software 200a1 may be further installed. The ECU 200a starts up the software 200a1 in response to connection of the charging station 30 to the battery 300 or the like. The ECU 200a can manage the battery 300 according to the software 200a1. The ECU 200a has a function of managing the battery 300.

For example, the ECU 200a can grasp the state of the battery 300 (for example, the remaining charge amount of the battery) and notify the central ECU 100 of information related to the state of the battery 300. The ECU 200a may request the charging device 601 to start charging when the charging device 601 is connected to the battery 300. The ECU 200a may request the charging device 601 to terminate the charging when the charging amount of the battery 300 reaches a predetermined amount.

Software 200b1 is installed in the ECU 200b. Software other than the software 200b1 may be further installed in the ECU 200b. The ECU 200b starts up the software 200b1 in response to startup or the like of the vehicle 10. The ECU 200b can execute first processing according to the software 200b1. The ECU 200b has a first function of executing the first processing. The first function may be a function other than a function of the central ECU 100 and a function of the ECU 200a.

Software 200c1 is installed in the ECU 200c. Software other than the software 200c1 may be further installed in the ECU 200c. The ECU 200c starts up the software 200c1 in response to startup or the like of the vehicle 10. The ECU 200c can execute second processing according to the software 200c1. The ECU 200b has a second function of executing the second processing. The second function may be a function other than the function of the central ECU 100, the function of the ECU 200a, and the first function.

Software 200d1 is installed in the ECU 200d. Software other than the software 200d1 may be further installed in the ECU 200d. The ECU 200d starts up the software 200d1 in response to startup of the vehicle 10 or the like. The ECU 200d can execute third processing according to the software 200d1. The ECU 200d has a third function of executing the third processing. The third function may be a function other than the function of the central ECU 100, the function of the ECU 200a, the first function, and the second function.

The number of ECUs other than the central ECU 100 and the ECU 200a is not limited to three (the ECUs 200b to 200d) illustrated in FIG. 2, and may be two or less or four or more.

The battery 300 can store power to be used in the vehicle 10. The battery 300 is connected to a motor (not illustrated) via a power conversion device (not illustrated), and can supply the stored power to the motor via the power conversion device.

The battery 300 includes a charging interface 301, a charging circuit 302, and a power storage unit 303.

The charging interface 301 functions as an interface for the charging device 601. The charging interface 301 has an inlet. The inlet corresponds to an outlet of the charging device 601. When the charging device 601 has an outlet that is compliant with a predetermined charging standard (for example, the CHAdeMO standard, the GB/T standard, the CCS standard, or the like), the charging interface 301 has an inlet that is compliant with the predetermined charging standard.

For the sake of simplicity, it is assumed that the outlet of the charging device 601 and the inlet of the charging interface 301 are for rapid charging or mainly perform rapid charging operation.

The charging circuit 302 is connected between the charging interface 301 and the power storage unit 303, performs predetermined power conversion on the power received by the charging interface 301, and supplies the power to the power storage unit 303. The charging circuit 302 includes an AC/DC converter that converts AC power from the charging interface 301 into DC power, a DC/DC converter that converts a voltage level, and various switches that turn on and off power supply to the power storage unit 303.

The power storage unit 303 stores the supplied power. The power storage unit 303 may be a power storage component such as an electric double layer capacitor or an electrolytic capacitor, or may be a secondary battery such as a lead storage battery, a lithium ion battery, a nickel hydrogen battery, a nickel cadmium battery, or an all-solid battery.

The display 400 can display predetermined information about the display screen. The display 400 may be disposed at a position where a user (for example, a driver or a passenger) can visually recognize the display in the vehicle interior.

Upon receiving information related to the charging device 601, the central ECU 10 generates display information corresponding thereto and supplies the display information to the display 400. The display 400 may display the information related to the charging device 601 on the display screen according to the display information. The information related to the charging device 601 includes, for example, information related to a location of the charging station 30 including the charging device 601 and information related to a use reservation of the charging device 601.

The display 400 may further be capable of receiving input from the user. In the display 400, a button for receiving an input may be disposed around the display screen, or a touch sensor for detecting an input may be stacked on the display screen.

Upon receiving the input from the user, the display 400 supplies input information to the central ECU 10. The central ECU 10 may transmit the input information to the vehicle management server 20 via a wireless communication link.

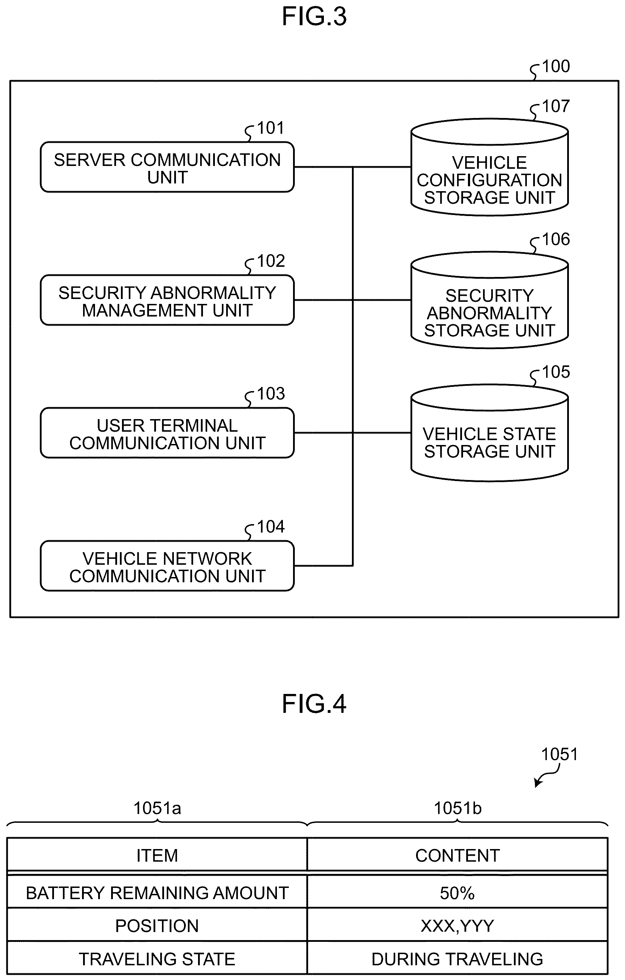

The central ECU 100 can be configured as illustrated in FIG. 3. FIG. 3 is a diagram illustrating a configuration of the central ECU 100.

The central ECU 100 includes a server communication unit 101, a security abnormality management unit 102, a user terminal communication unit 103, a vehicle network communication unit 104, a vehicle state storage unit 105, a security abnormality storage unit 106, and a vehicle configuration storage unit 107.

Each unit in the central ECU 100 may be implemented in a software manner as a module configured in the central ECU 100 by execution of the software 1001 (refer to FIG. 2). For example, the central ECU 100 may be a system including a processor, a non-volatile memory, and a volatile memory. The non-volatile memory stores a program. The processor may read and start the program from the non-volatile memory triggered by power activation or the like of the vehicle 10 and may load the modules corresponding to the respective units collectively at the time of compiling or sequentially on the volatile memory according to the progress of processing. Thereby, the processor may operate according to the program. Alternatively, each unit in the central ECU 100 may be implemented in a hardware manner as a circuit configured in the central ECU 100. Alternatively, some of the units in the central ECU 100 may be implemented in a software manner and the others may be implemented in a hardware manner.

The server communication unit 101 functions as a communication interface via a wireless communication link. The server communication unit 101 can communicate with the vehicle management server 20 via the wireless communication link. For example, the server communication unit 101 may transmit predetermined information (for example, management information related to security of the vehicle 10) to the vehicle management server 20 via the wireless communication link. The server communication unit 101 may receive predetermined information from the vehicle management server 20 via the wireless communication link.

The server communication unit 101 may further have a function as a firewall for communication access from the outside. The server communication unit 101 may have a function that authentication information in which a transmission source ID and a password are associated with each other with respect to plural transmission source IDs is set in advance, and authentication for communication access from the outside is performed using the authentication information. The server communication unit 101 may have a function that a blacklist including one or more transmission source IDs to be rejected or a whitelist including one or more transmission source IDs to be approved is set in advance, and filtering communication access from the outside is performed using the blacklist or the whitelist.

The security abnormality management unit 102 manages the security abnormality of the vehicle 10. The security abnormality of the vehicle 10 may be comprehensively detected by the security abnormality management unit 102, may be detected by the security abnormality management unit 102 and other ECUs 200a to 200d, or may be detected by the vehicle management server 20.

The security abnormality management unit 102 may manage the presence or absence, the number of times, or the freshness of the security breach history. The security abnormality management unit 102 may manage the number of occurrences of security errors determined by monitoring information received by the vehicle 10 or information communicated in the vehicle 10.

For example, the security abnormality management unit 102 may have a function of detecting a cyberattack received by the vehicle 10 from the outside and/or a breach of an unauthorized operation of malware in the vehicle 10. Alternatively, in a case where each ECU (the central ECU 100 and the ECUs 200a to 200d) has a function of detecting a breach with respect to a cyberattack and/or an unauthorized operation of malware, the security abnormality management unit 102 may have a function of integrating detection results of the breach in the respective ECUs. Alternatively, in a case where the vehicle management server 20 has a function of detecting a breach in a cyberattack and/or an unauthorized operation of malware, the security abnormality management unit 102 may have a function of acquiring a detection result of the breach in the vehicle management server 20 via the wireless communication link and the server communication unit 101.

The user terminal communication unit 103 functions as a communication interface via a wireless communication link. The user terminal communication unit 103 can communicate with a user terminal via the wireless communication link. The wireless communication link may be a Bluetooth (registered trademark) link, a Wi-Fi link, or the like. Although not illustrated, the user terminal may be a smartphone. For example, in a case where predetermined information is reported to a user (for example, a driver or a passenger) instead of the display 400 or together with the display 400, the user terminal communication unit 103 may transmit predetermined information (for example, information related to the charging device 601) to the user terminal via the wireless communication link. Accordingly, when the predetermined information received by the user terminal is displayed on the screen, the predetermined information can be notified to the user.

The vehicle network communication unit 104 functions as an interface for communication via the vehicle network 500. The vehicle network communication unit 104 can communicate with each unit (refer to FIG. 2) in the vehicle 10 via the vehicle network 500.

The vehicle state storage unit 105 stores vehicle state information 1051. The vehicle state information 1051 is information related to the current state of the vehicle 10. The vehicle state information 1051 is information in which an item related to the vehicle state and the content thereof are associated with each other with respect to plural items. The vehicle state information 1051 may have a data structure as illustrated in FIG. 4. FIG. 4 is a diagram illustrating a data structure of the vehicle state information 1051.

The vehicle state information 1051 includes an item field 1051a and a content field 1051b. In the item field 1051a, items related to the current vehicle state are recorded. In the content field 1051b, contents related to the current vehicle state are recorded. By referring to the vehicle state information 1051, it is possible to grasp the items related to the current vehicle state and the contents corresponding thereto.

In the case of FIG. 4, "battery remaining amount", "position", and "traveling state" are recorded in the item field 1051a, and "50%", "XXX, YYY", and "traveling" are recorded in the content field 1051b. It is possible to grasp that the current "battery remaining amount" is "50%", the current "position" is "XXX, YYY", and the current "traveling state" is "traveling" by referring to the vehicle state information 1051.

The central ECU 100 illustrated in FIG. 3 can access the vehicle state storage unit 105 and can update the vehicle state information 1051. The central ECU 100 may communicate with each unit in the vehicle 10 via the vehicle network communication unit 104, may collect information related to the current vehicle state, and may update the vehicle state information 1051 according to the collection result.

The central ECU 100 may update the vehicle state information 1051 every lapse of a predetermined cycle.

The central ECU 100 may monitor the current vehicle state and update the vehicle state information 1051 each time a change in the current vehicle state is detected.

Alternatively, each ECU (the central ECU 100 and the ECUs 200a to 200d) may monitor the current vehicle state corresponding to the shared function and may give a notification to the central ECU 100 every time a change in the current vehicle state is detected. Upon receiving the notification of the change in the current vehicle state, the central ECU 100 may update the vehicle state information 1051 according to the notification.

The server communication unit 101 may refer to the vehicle state storage unit 105, may acquire the vehicle state information 1051 from the vehicle state storage unit 105, and may transmit the vehicle state information 1051 to the vehicle management server 20 via the wireless communication link. As a result, the vehicle management server 20 can manage the current state of the vehicle 10.

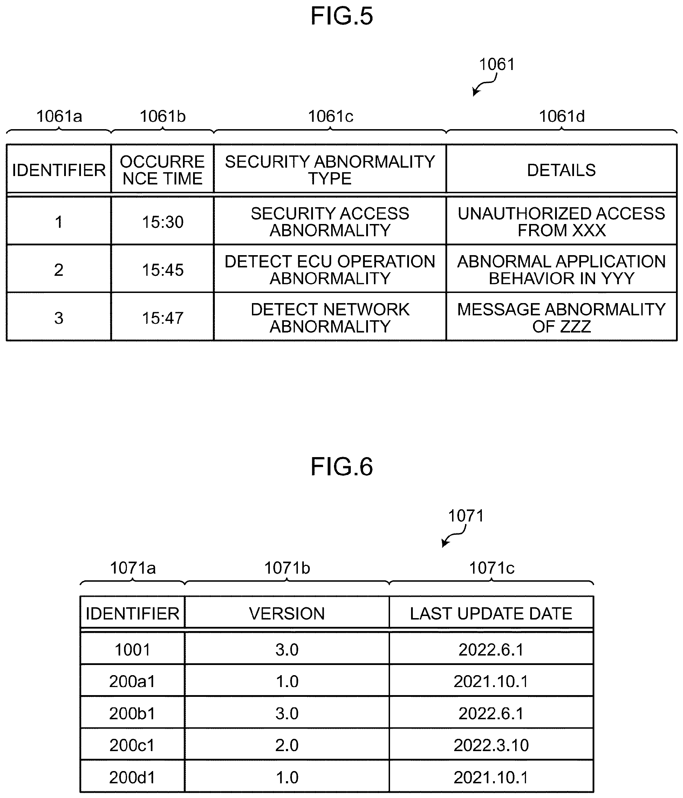

The security abnormality storage unit 106 stores security abnormality information 1061. The security abnormality information 1061 is information related to a history (log) of the security abnormality of the vehicle 10. The security abnormality information 1061 is information in which an identifier of a log, an occurrence time of the security abnormality, a type of the security abnormality, and the details thereof are associated with each other with respect to plural logs. The security abnormality information 1061 may have a data structure as illustrated in FIG. 5. FIG. 5 is a diagram illustrating the data structure of the security abnormality information 1061.

The security abnormality information 1061 includes an identifier field 1061a, an occurrence time field 1061b, a security abnormality type field 1061c, and a detail field 1061d. An identifier (for example, a log number) of the log is recorded in the identifier field 1061a. The occurrence time of the security abnormality is recorded in the occurrence time field 1061b. In the security abnormality type field 1061c, the type of the security abnormality is recorded. Details of the security abnormality are recorded in the detail field 1061d. By referring to the security abnormality information 1061, it is possible to grasp the occurrence time and the type and details of the security abnormality for each log.

In the case of FIG. 5, "1", "2", and "3" are recorded in the identifier field 1061a. "15:30", "15:45", and "15:47" are recorded in the occurrence time field 1061b. "Security access abnormality", "ECU operation abnormality detection", and "network abnormality detection" are recorded in the security abnormality type field 1061c. "Unauthorized access from XXX", "abnormal application behavior in YYY", and "message abnormality in ZZZ" are recorded in the detail field 1061d. It is possible to grasp that "unauthorized access from XXX" has occurred as "security access abnormality" at "15:30" by referring to the log "1" in the security abnormality information 1061. It is possible to grasp that "abnormal application behavior in YYY" has occurred as "ECU operation abnormality detection" at "15:45" by referring to the log "2". By referring to the log "3", it is possible to grasp that "message abnormality in ZZZ" has occurred at "15:47" as "network abnormality detection".

The security abnormality management unit 102 illustrated in FIG. 3 can access the security abnormality storage unit 106 and can update the security abnormality information 1061. The security abnormality management unit 102 may collect the information related to the security abnormality of the vehicle 10 and may update the security abnormality information 1061 according to the collection result.

The security abnormality management unit 102 may update the security abnormality information 1061 every lapse of a predetermined cycle.

The security abnormality management unit 102 may monitor the current security state of the vehicle 10 and update the security abnormality information 1061 each time the security abnormality of the vehicle 10 is detected.

Alternatively, each electronic control unit (the central ECU 100 and ECUs 200a to 200d) may monitor the current security state of the vehicle 10 corresponding to the shared function and may give a notification to the central ECU 100 every time the security abnormality is detected. Upon receiving the notification of the security abnormality, the central ECU 100 may update the security abnormality information 1061 according to the notification.

The server communication unit 101 may refer to the security abnormality storage unit 106, may acquire the security abnormality information 1061 from the security abnormality storage unit 106, and may transmit the security abnormality information 1061 to the vehicle management server 20 via the wireless communication link. As a result, the vehicle management server 20 can manage the security abnormality of the vehicle 10.

The vehicle configuration storage unit 107 stores vehicle configuration information 1071. The vehicle configuration information 1071 is information related to the current configuration of the vehicle 10. The vehicle configuration information 1071 includes information related to a configuration of software currently installed in the vehicle 10. The vehicle configuration information 1071 includes information in which an identifier of software, a version of the software, and a last update date of the software are associated with each other with respect to plural pieces of software. The vehicle configuration information 1071 may have a data structure as illustrated in FIG. 6. FIG. 6 is a diagram illustrating a data structure of the vehicle configuration information 1071.

The vehicle configuration information 1071 includes an identifier field 1071a, a version field 1071b, and a last update date field 1071c. The identifier of the software is recorded in the identifier field 1071a. In the version field 1071b, the version of the software is recorded. The last update date of the software is recorded in the last update date field 1071c. By referring to the vehicle configuration information 1071, it is possible to grasp the version of the software currently installed in the vehicle 10 and the last update date thereof.

In the case of FIG. 6, "1001", "200a1", "200b1", "200c1", and "200d1" are recorded in the identifier field 1071a. "3.0", "1.0", "3.0", "2.0", and "1.0" are recorded in the version field 1071b. "2022.6.1", "2021.10.1", "2022.6.1", "2022.3.10", and "2021.10.1" are recorded in the last update date field 1071c. It can be identified that the version of the software "1001" is "3.0" and the last update date thereof is "2022.6.1" by referring to the vehicle configuration information 1071. It can be identified that the version of the software "200a1" is "1.0" and the last update date thereof is "2022.3.10". It can be identified that the version of the software "200b1" is "3.0" and the last update date thereof is "2022.6.1". It can be identified that the version of the software "200c1" is "2.0" and the last update date thereof is "2022.3.10". It can be identified that the version of the software "200d1" is "1.0" and the last update date thereof is "2021.10.1".

The central ECU 100 illustrated in FIG. 3 can access the vehicle configuration storage unit 107 and can update the vehicle configuration information 1071. The central ECU 100 may communicate with other ECUs (ECUs 200a to 200d) in the vehicle 10 via the vehicle network communication unit 104, may collect information related to software currently installed in the central ECU 100 and the other ECUs, and may update the vehicle configuration information 1071 according to a collection result.

The central ECU 100 may update the vehicle configuration information 1071 every lapse of a predetermined cycle.

The central ECU 100 may monitor information related to the software installed in each ECU and may update the vehicle configuration information 1071 each time a change in the information related to the software installed in each ECU is detected.

Alternatively, each electronic control unit (the central ECU 100 and the ECUs 200a to 200d) may monitor information related to software installed in the ECU itself and may notify the central ECU 100 of a change in the information related to the installed software each time the change is detected. Upon receiving the notification of the change in the information related to the installed software, the central ECU 100 may update the vehicle configuration information 1071 according to the notification.

The server communication unit 101 may refer to the vehicle configuration storage unit 107, may acquire the vehicle configuration information 1071 from the vehicle configuration storage unit 107, and may transmit the vehicle configuration information 1071 to the vehicle management server 20 via the wireless communication link. As a result, the vehicle management server 20 can manage the current configuration of the vehicle 10 (for example, information related to software currently installed in the vehicle 10).

Note that FIG. 6 illustrates the vehicle configuration information 1071 in a case where one piece of software 1001, 200a1 to 200d1 is installed for each ECU (the central ECU 100 and the ECUs 200a to 200d). However, if there is an ECU in which one or more pieces of software are additionally installed, information of the software can also be included in the vehicle configuration information 1071.

The vehicle configuration information 1071 may be protected so as not to be tampered with. For example, the central ECU 100 stores a secret key, and the vehicle management server 20 stores a public key. The secret key and the public key constitute a key pair. The central ECU 100 may generate a hash value of the vehicle configuration information 1071 and may encrypt the hash value with a private key to generate a message authentication code. The central ECU 100 can transmit the vehicle configuration information 1071 and the message authentication code to the vehicle management server 20. The vehicle management server 20 generates the hash value of the vehicle configuration information 1071. The vehicle management server 20 decodes the message authentication code with the public key and reverts the message authentication code to the hash value. If the generated hash value matches the decoded hash value, the vehicle management server 20 determines that the vehicle configuration information 1071 has not been tampered with, and can update the management information stored therein according to the vehicle configuration information. If the generated hash value and the decoded hash value do not match each other, the vehicle management server 20 can determine that the vehicle configuration information 1071 has been tampered with and notify the vehicle 10 of an alert.

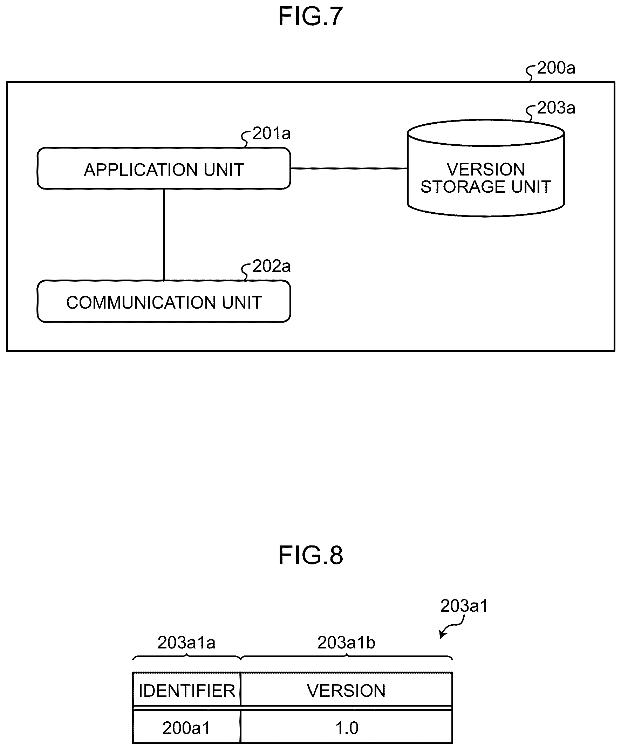

The ECU 200a can be configured as illustrated in FIG. 7. FIG. 7 is a diagram illustrating a configuration of the ECU 200a. Although the configuration of the ECU 200a is illustrated in FIG. 7, the configurations of the other ECUs 200b to 200d are also similar to the configuration of the ECU 200a.

The ECU 200a includes an application unit 201a, a communication unit 202a, and a version storage unit 203b.

Each unit in the ECU 200a may be implemented in a software manner as a module configured in the ECU 200a by execution of the software 200a1 (refer to FIG. 2). For example, the ECU 200a may be a system including a processor, a non-volatile memory, and a volatile memory. The non-volatile memory stores a program. The processor may read and starts the program from the non-volatile memory triggered by power activation or the like of the vehicle 10 and may load the modules corresponding to the respective units collectively at the time of compiling or sequentially on the volatile memory according to the progress of processing. Thereby, the processor may operate according to the program. Alternatively, each unit in the ECU 200a may be implemented in a hardware manner as a circuit configured in the ECU 200a. Alternatively, some of the units in the ECU 200a may be implemented in a software manner, and the others may be implemented in a hardware manner.

The communication unit 202a functions as a communication interface via a vehicle network. The communication unit 202a can communicate with each unit (for example, the central ECU 100) in the vehicle 10 via the vehicle network.

The application unit 201a can execute an application corresponding to the function of the ECU 200a. The application unit 201a can execute an application for managing the battery 300. Note that the respective processing contents of the application units 201a of the ECUs 200a to 200d may vary with the functions of the ECUs.

In the case of the ECU 200a, the application unit 201a accesses the battery 300 and acquires the state (for example, the remaining charge amount of the battery) of the battery 300. The application unit 201a may notify the central ECU 100 of information related to the state of the battery 300 via the communication unit 202a and the vehicle network in response to a request from the central ECU 100 or autonomously with establishment of a predetermined condition as a trigger. The predetermined condition may include that a change amount of the state (for example, the remaining charge amount of the battery) of the battery 300 exceeds a predetermined amount. As a result, in the central ECU 100, the vehicle state information 1051 (refer to FIG. 4) stored in the vehicle state storage unit 105 can be updated by the notified information related to the state of the battery 300.

When the charging device 601 is connected to the battery 300, the application unit 201a may receive a connection signal indicating the connection and may supply a charging start request to the charging device 601 via the battery 300 in response to the connection signal. As a result, the charging device 601 may start power supply to the battery 300 in response to the charging start request.

The application unit 201a may monitor a charging amount during charging of the battery 300 and may supply a charging end request to the charging device 601 via the battery 300 when the charging amount of the battery 300 reaches an upper limit threshold. As a result, the charging device 601 may end the power supply to the battery 300 in response to a charging end request.

A version storage unit 203a stores version information 203a1. The version information 203a1 is information related to a version of software installed in the ECU 200a. The version information 203a1 is information in which an identifier of software and the version thereof are associated with each other. The version information 203a1 may have a data structure as illustrated in FIG. 8. FIG. 8 is a diagram illustrating a data structure of the version information 203a1.

The version information 203a1 includes an identifier field 203a1a and a version field 203a1b. An identifier of the software is recorded in the identifier field 203a1a. In the version field 203a1b, the version of the software is recorded. By referring to the version information 203a1, it is possible to grasp the version of the software installed in the ECU 200a.

In the case of FIG. 8, "200a1" is recorded in the identifier field 203ala. "1.0" is recorded in the version field 203a1b. By referring to the version information 203a1, it is possible to grasp that the version of the software "200a1" installed in the ECU 200a is "1.0".

The ECU 200a illustrated in FIG. 7 can access the version storage unit 203a and can update the version information 203a1. When the installed software 200a1 is upgraded, the ECU 200a may acquire the version after the upgrade and may update the version information 203a1 according to the acquisition result.

The ECU 200a may notify the central ECU 100 of the version information 203a1 via the communication unit 202a and the vehicle network in response to a request from the central ECU 100 or autonomously with establishment of a predetermined condition as a trigger. The predetermined condition may be a condition that the software is upgraded. As a result, in the central ECU 100, the vehicle configuration information 1071 (refer to FIG. 6) stored in the vehicle configuration storage unit 107 can be updated by the notified version information 203a1.

Note that FIG. 8 illustrates a configuration of the version information 203a1 in a case where one piece of software 200a1 is installed in the ECU 200a. However, if one or more pieces of software are additionally installed in the ECU 200a, information of the software can also be included in the version information 203a1.

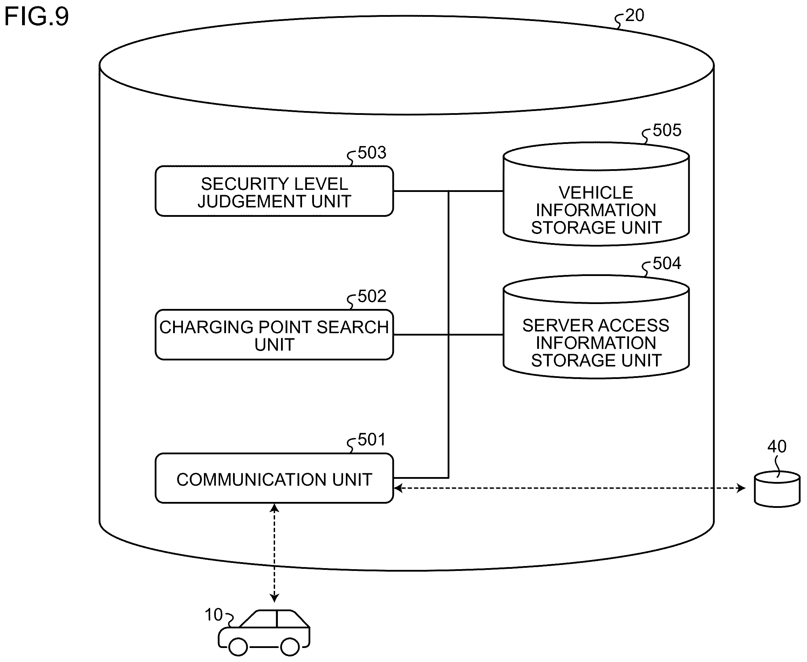

The vehicle management server 20 can be configured as illustrated in FIG. 9. FIG. 9 is a diagram illustrating the configuration of the vehicle management server 20.

The vehicle management server 20 includes a communication unit 501, a charging point search unit 502, a security level judgement unit 503, a server access information storage unit 504, and a vehicle information storage unit 505.

The communication unit 501 may function as a communication interface via wireless communication link, or may function as a communication interface via a wireless communication link and/or a wired communication line. The communication unit 501 can communicate with the vehicle 10 via the wireless communication link. The communication unit 501 can communicate with the station management server 40 via the wireless communication link and/or the wired communication line.

The charging point search unit 502 searches for a charging point in response to a search request from the vehicle 10 or autonomously with establishment of a predetermined condition as a trigger. The predetermined condition may be a condition that the remaining charge amount of the vehicle 10 falls below a lower limit threshold. The charging point includes a position of the charging station 30 that includes one or more charging devices 601. The charging point search unit 502 may search for a charging point by making an inquiry to the station management server 40.

The security level judgement unit 503 judges the security level of the vehicle 10 according to the management information related to the security of the vehicle 10. The management information of the vehicle 10 may include information about whether the version of the software installed in the vehicle 10 is the latest version. The management information of the vehicle 10 may include information about whether the vehicle 10 has been subjected to a cyberattack and/or a breach against an unauthorized operation of malware in the past. The management information of the vehicle 10 may include information about whether a security monitoring service is enabled for the vehicle 10.

The security level judgement unit 503 may judge the security level of the vehicle 10 by continuous numerical values or by ranks of a plurality of levels.

When the determination is made by continuous numerical values, the security level judgement unit 503 may obtain a score for each of plural evaluation items and may quantify the security level by summing or averaging the scores of the evaluation items. The evaluation items include whether the version of the software installed in the vehicle 10 is the latest version, whether the vehicle 10 has been subjected to a cyberattack and/or a breach against an unauthorized operation of malware in the past, whether a security monitoring service is enabled for the vehicle 10, and the like.

When the judgement is made by ranks of plural stages, the security level judgement unit 503 may rank the security level of the vehicle 10 in plural stages while determining evaluation items stepwise. The stages may be, for example, three stages including low, medium, and high.

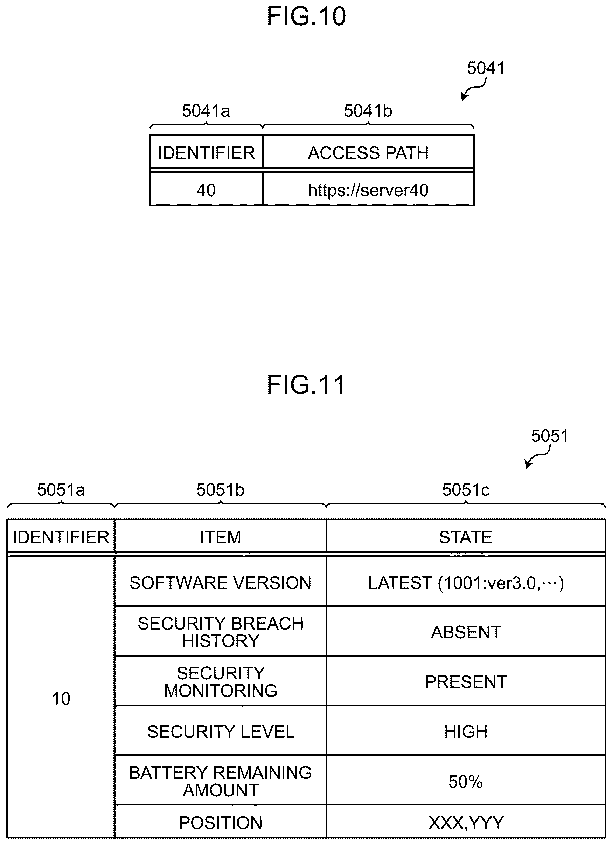

The server access information storage unit 504 stores server access information 5041. The server access information 5041 includes access information to the station management server 40 as an inquiry destination. The server access information 5041 is information in which an identifier of the station management server 40 and an access path thereof are associated with each other. The server access information 5041 may have a data structure as illustrated in FIG. 10. FIG. 10 is a diagram illustrating a data structure of the server access information 5041.

The server access information 5041 includes an identifier field 5041a and an access path field 5041b. An identifier of the station management server 40 is recorded in the identifier field 5041a. An access path to the station management server 40 is recorded in the access path field 5041b. By referring to the server access information 5041, it is possible to grasp the access path to the station management server 40.

In the case of FIG. 10, "40" is recorded in the identifier field 5041a, and "https://server40" is recorded in the access path field 5041b. By referring to the server access information 5041, it can be identified that the access path to the station management server "40" is "https://server40".

The charging point search unit 502 receives a charging point search request from the vehicle 10. The search request may include a current position of the vehicle 10. In response to the search request, the charging point search unit 502 generates a station search request for requesting a search for the charging station 30. The station search request may include the current position of the vehicle 10. The charging point search unit 502 accesses the server access information storage unit 504, looks up the server access information 5041, and acquires an access path to the station management server 40. Based on the acquired access path, the charging point search unit 502 transmits the station search request to the station management server 40 via the communication unit 501, the wireless communication link, and/or the wired communication line, and waits for the response. Upon receiving station information as a response, the charging point search unit 502 transmits the station information to the vehicle 10 via the communication unit 501 and the wireless communication link. The station information includes information about the position of the charging station 30 found by the station management server 40. As a result, in the vehicle 10, the information about the position of the charging station 30 according to the station information is displayed on the display 400, and the information about the position of the charging station 30 can be notified to a user (for example, a driver or a passenger).

The vehicle information storage unit 505 stores vehicle information 5051. The vehicle information 5051 includes management information related to the security of the vehicle 10. The vehicle information 5051 is information in which an identifier of the vehicle 10, an item related to an attribute of the vehicle 10, and a state thereof are associated with each other. The vehicle information 5051 may have a data structure as illustrated in FIG. 11. FIG. 11 is a diagram illustrating a data structure of the vehicle information 5051.

The vehicle information 5051 includes an identifier field 5051a, an item field 5051b, and a state field 5051c. An identifier of the vehicle 10 is recorded in the identifier field 5051a. Items related to attributes of the vehicle 10 are recorded in the item field 1051a. A state related to the attribute of the vehicle 10 is recorded in the state field 5051c. By referring to the vehicle information 5051, the current state regarding the attribute of the vehicle 10 can be identified.

In the case of FIG. 11, "10" is recorded in the identifier field 5051a. "Software version", "security breach history", "security monitoring", "battery remaining amount", and "position" are recorded in the item field 5051b. "Latest (1001: ver3.0, ···)", "absent", "present", "50%", and "XXX, YYY" are recorded in the state field 5051c. By referring to the vehicle information 5051, it can be identified that, regarding the vehicle "10", the "software version" is "latest", the "security breach history" is "absent", the "security monitoring" service is "present", the "battery remaining amount" is "50%", and the current "position" is "XXX, YYY".

The vehicle management server 20 illustrated in FIG. 9 can access the vehicle information storage unit 505 and can update the vehicle information 5051. The vehicle management server 20 may communicate with the vehicle 10, may collect the vehicle state information 1051 (refer to FIG. 4), the security abnormality information 1061 (refer to FIG. 5), and the vehicle configuration information 1071 (refer to FIG. 6), and may update the vehicle information 5051 according to the collection result.

The vehicle management server 20 may update the vehicle information 5051 every lapse of a predetermined cycle.

The vehicle management server 20 may monitor the vehicle state information 1051, the security abnormality information 1061, and the vehicle configuration information 1071, and may update the vehicle information 5051 each time a change in the vehicle state information 1051, the security abnormality information 1061, and the vehicle configuration information 1071 is detected.

The security level judgement unit 503 may access the vehicle information storage unit 505, may refer to the vehicle information 5051, and may determine the security level of the vehicle 10 according to the vehicle information 5051. The security level judgement unit 503 may judge the security level of the vehicle 10 according to the states of the items "software version", "security breach history", and "security monitoring", and may add the determination result to the vehicle information 5051.

In the case of FIG. 11, regarding the vehicle "10", since the "software version" is "latest", the "security breach history" is "absent", and the "security monitoring" service is "present", the security level judgement unit 503 judges that the "security level" is "high". In accordance with this judgement, the security level judgement unit 503 adds the item "security level" and the state "high" to the vehicle information 5051 of the vehicle "10".

The communication unit 501 may refer to the vehicle information storage unit 505, may acquire the vehicle information 5051 from the vehicle information storage unit 505, and may transmit the vehicle information 5051 to the station management server 40 via a wireless communication link and/or a wired communication line. The vehicle information 5051 includes a determination result of the security level of the vehicle 10. As a result, the station management server 40 can generate the station information to be provided to the vehicle 10 according to the current security level of the vehicle 10.

Upon receiving a reservation request for requesting use reservation of the charging device 601 from the vehicle 10, the vehicle management server 20 may transfer the received reservation request to the station management server 40.

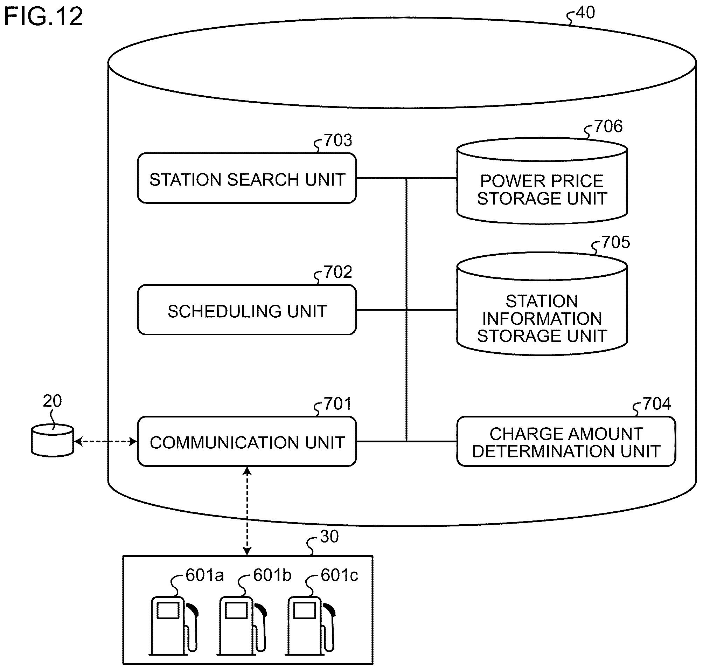

The station management server 40 can be configured as illustrated in FIG. 12. FIG. 12 is a diagram illustrating a configuration of the station management server 40.

The station management server 40 includes a communication unit 701, a scheduling unit 702, a station search unit 703, a charge amount determination unit 704, a station information storage unit 705, and a power price storage unit 706.

The communication unit 701 may function as a communication interface via the wireless communication link and/or the wired communication line. The communication unit 701 can communicate with the vehicle management server 20 via the wireless communication link and/or the wired communication line. The communication unit 701 can communicate with the charging station 30 via the wireless communication link and/or the wired communication line.

The station search unit 703 searches for information about available charging stations 30 under management in response to a station search request from the vehicle management server 20. The station search request may include the current position of the vehicle 10. The station search unit 703 may search for the charging station 30 existing within a range of a predetermined distance from the current position of the vehicle 10 as an available charging station. The station search unit 703 generates station information including the searched position of the charging station 30.

The station search unit 703 may change the time that the vehicle 10 can reserve for the searched charging station 30 according to the security level of the vehicle 10.

For example, in a case where the security level of the vehicle 10 is a first level, the station search unit 703 determines the time during which the vehicle 10 can reserve the charging station 30 as a first time. In response to the determination that the time available for reservation is the first time, the station search unit 703 generates the station information including information about the first time.

When the security level of the vehicle 10 is a second level, the station search unit 703 determines the time during which the vehicle 10 can reserve the charging station 30 as a second time. The second level is higher than the first level. The second time is longer than the first time. The second time includes the first time and includes a time further in the future than the first time. In response to the determination that the time available for reservation is the second time, the station search unit 703 generates the station information including information about the second time. As a result, the station information can be generated so as to favor the vehicle 10 more as compared with a case in which the security level of the vehicle 10 is the first level.

As a response to the station search request, the station search unit 703 returns the station information to the vehicle management server 20 via the communication unit 701, the wireless communication link, and/or the wired communication line. The vehicle management server 20 can transfer the station information to the vehicle 10, and the vehicle 10 can notify a user (for example, a driver or a passenger) of the station information by displaying the station information about the display 400.

Upon receiving the reservation request from the vehicle 10 via the vehicle management server 20, a scheduling unit 702 determines the charging station 30 in response to the reservation request. The scheduling unit 702 acquires information of the determined charging station 30. The scheduling unit 702 performs predetermined calculation on the determined charging station 30 using the acquired information, and generates a reservation schedule. In response to the reservation request, the scheduling unit 702 may calculate a charging start time, a charging speed, a charging amount, and the like of the charging station 30 to generate the reservation schedule. The scheduling unit 702 may further calculate an estimated amount of a usage fee and may include the estimated amount in the reservation schedule. The scheduling unit 702 may further perform adjustment such as suppressing the charging amount at a predetermined ratio with respect to the reservation schedule according to the state of the charging station 30 (for example, a power tight situation).

The scheduling unit 702 may receive the security level of the vehicle 10 from the vehicle management server 20, may change and calculate the charging speed according to the security level of the vehicle 10, and may generate the reservation schedule.

For example, when the security level of the vehicle 10 is the first level, the scheduling unit 702 determines the charging speed of the charging station 30 as a first speed. In response to the charging speed being determined as the first speed, the scheduling unit 702 performs calculation with the charging speed of the charging station 30 as the first speed and generates the reservation schedule.

When the security level of the vehicle 10 is the second level, the scheduling unit 702 determines the charging speed of the charging device as a second speed. The second level is higher than the first level. The second speed is faster than the first speed. In response to the charging speed being determined as the second speed, the scheduling unit 702 performs calculation with the charging speed of the charging station 30 as the second speed and generates the reservation schedule. As a result, it is possible to generate the reservation schedule so as to favor the vehicle 10 more as compared with a case in which the security level of the vehicle 10 is the first level.

The scheduling unit 702 may generate the reservation schedule by changing the discount rate of the usage fee of the charging station 30 according to the security level of the vehicle 10.

For example, in a case where the security level of the vehicle 10 is the first level, the scheduling unit 702 determines the discount rate of the usage fee of the charging station 30 by the vehicle 10 as a first rate. In response to the discount rate being determined as the first rate, the scheduling unit 702 obtains an amount of money obtained by discounting the amount of money based on the standard power price by the first rate. The scheduling unit 702 includes the obtained amount of money in the reservation schedule as the estimated amount of the usage fee.

For example, in a case where the security level of the vehicle 10 is the second level, the scheduling unit 702 determines the discount rate of the usage fee of the charging station 30 by the vehicle 10 as a second rate. The second level is higher than the first level. The second rate is greater than the first rate. In response to the discount rate being determined as the second rate, the scheduling unit 702 obtains an amount of money obtained by discounting the amount of money based on the standard power price by the second rate. The scheduling unit 702 includes the obtained amount of money in the reservation schedule as the estimated amount of the usage fee. As a result, it is possible to generate the reservation schedule so as to favor the vehicle 10 more as compared with a case in which the security level of the vehicle 10 is the first level.

The scheduling unit 702 transmits the reservation schedule to the charging station 30 via a wireless communication link and/or a wired communication line. As a result, the reservation schedule can be registered in the charging station 30.

Note that, in the charging station 30, in a case where there is a prior reservation, it is possible to wait for a reservation, and basically on a first-come, first-served basis. However, in a case where the security level is high, a priority is given to entering a queue for waiting for a reservation. In the charging station 30, the higher the security level, the more reservation frames can be secured. For example, another time zone may be reserved up to one frame when the security level is "low", up to three frames when the security level is "medium", and up to five frames when the security level is "high".

As a response to the reservation request, the scheduling unit 702 returns the reservation schedule to the vehicle management server 20 via the communication unit 701, the wireless communication link, and/or the wired communication line. The vehicle management server 20 can transfer the reservation schedule to the vehicle 10, and the reservation schedule is displayed on the display 400 in the vehicle 10, whereby the reservation schedule can be notified to a user (for example, a driver or a passenger).

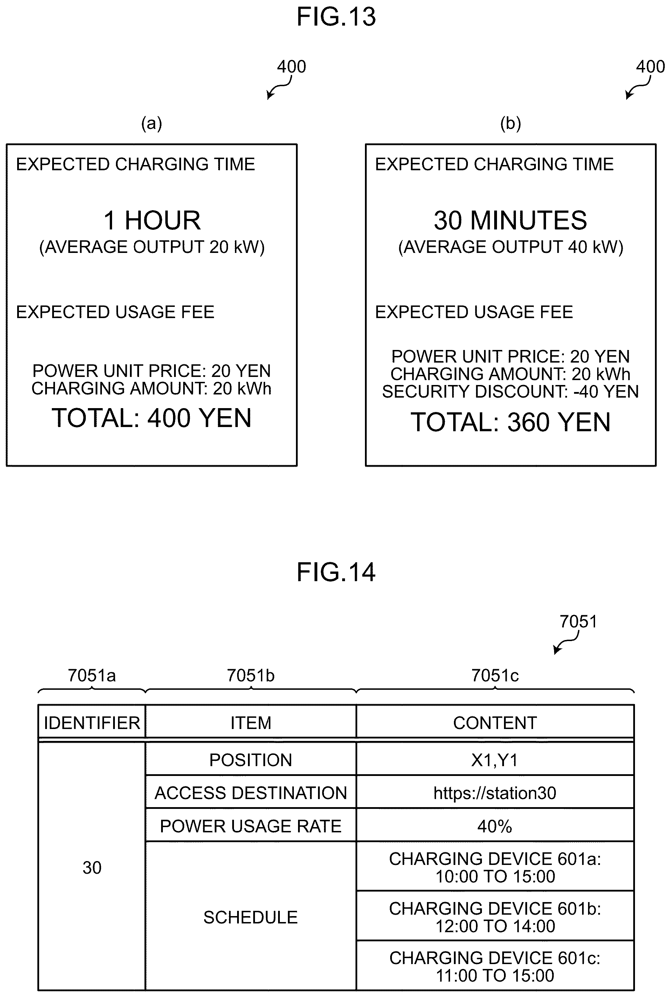

For example, when the security level of the vehicle 10 is the first level, the display 400 may display a reservation schedule as illustrated in FIG. 13(a). FIG. 13 is a diagram illustrating a reservation schedule notified to the vehicle 10. In the case of FIG. 13(a), a reservation schedule including the fact that the estimated charging time is 1 hour, the average output of the charging device 601 is 20 kW, the discount rate is 0%, and the estimated usage fee is 400 yen is exemplified.

Alternatively, when the security level of the vehicle 10 is the second level higher than the first level, the display 400 may display a reservation schedule as illustrated in FIG. 13(b). In the case of FIG. 13(b), a reservation schedule including the fact that the estimated charging time is 30 minutes, the average output of the charging device 601 is 40 kW, the discount rate is 10% (discount amount is -40 yen), and the estimated usage fee is 360 yen is exemplified. As a result, the reservation schedule determined to favor the vehicle 10 more than a case in which the security level of the vehicle 10 is the first level can be notified.

The charge amount determination unit 704 illustrated in FIG. 12 determines a charge amount to the vehicle 10 for the use of the charging device 601 by the vehicle 10. The charge amount determination unit 704 receives usage record information indicating a usage record of the charging device 601 by the vehicle 10 from the charging station 30 via the wireless communication link and/or the wired communication line. The charge amount determination unit 704 calculates a charge amount to the vehicle 10 according to the usage record information, and generates charge information including the charge amount.

The charge amount determination unit 704 may receive the security level of the vehicle 10 from the vehicle management server 20, may perform calculation by changing the discount rate of the usage fee of the charging station 30 according to the security level of the vehicle 10, and may generate the charge information including the charge amount.

For example, when the security level of the vehicle 10 is the first level, the charge amount determination unit 704 determines the discount rate of the usage fee of the charging station 30 by the vehicle 10 as the first rate. In response to the discount rate being determined as the first rate, the charge amount determination unit 704 obtains an amount of money obtained by discounting the amount of money based on the standard power price by the first rate. The charge amount determination unit 704 generates charge information using the obtained amount of money as a charge amount to the vehicle 10.

When the security level of the vehicle 10 is the second level, the charge amount determination unit 704 determines the discount rate of the usage fee of the charging station 30 by the vehicle 10 as the second rate. The second level is higher than the first level. The second rate is greater than the first rate. In response to the discount rate being determined as the second rate, the scheduling unit 702 obtains an amount of money obtained by discounting the amount of money based on the standard power price by the second rate. The charge amount determination unit 704 generates charge information using the obtained amount of money as a charge amount to the vehicle 10. As a result, the charge information can be generated so as to favor the vehicle 10 more as compared with a case in which the security level of the vehicle 10 is the first level.

The charge amount determination unit 704 may transmit the charge information to the charging station 30 via a wireless communication link and/or a wired communication line. As a result, the charge amount corresponding to the charge information at the charging station 30 is displayed on the display of the charging device 601, and a user (for example, a driver or a passenger) can be notified of the charge amount.

Alternatively, the charge amount determination unit 704 may transmit the charge information to the vehicle management server 20 via the wireless communication link and/or the wired communication line. The vehicle management server 20 can transmit the charge information to the vehicle 10, and the charge information is displayed on the display 400 in the vehicle 10, whereby the charge amount can be notified to a user (for example, a driver or a passenger).

In a case where payment is made offline according to the notified charge amount, if the user directly pays the charge amount at the charging station 30, the payment for the charge amount to the vehicle 10 is completed.

In a case where payment is made online according to the notified charge amount, the user inputs an online payment selection instruction in the vehicle 10, and the selection instruction is transmitted from the vehicle 10 to the charging station 30. In response to the selection instruction, the charging station 30 enters a state capable of receiving the input of online payment information. The user performs an input operation or the like of the online payment information at the charging station 30, and in response to the input operation or the like, the online payment information can be transmitted from the charging station 30 to the vehicle management server 20 via the station management server 40. If the vehicle management server 20 has been entrusted with proxy of the online payment by an owner (for example, a driver) of the vehicle 10 in advance, the vehicle management server 20 executes the online payment corresponding to the online payment information about behalf of the owner of the vehicle 10. As a result, the payment for the charge amount to the vehicle 10 is completed.

The station information storage unit 705 stores station information 7051. The station information 7051 is management information of the charging station 30. The station information 7051 is information in which an identifier of the charging station 30, an item regarding the attribute of the charging station 30, and a content thereof are associated with each other. The station information 7051 may have a data structure as illustrated in FIG. 14. FIG. 14 is a diagram illustrating a data structure of the station information 7051.

The station information 7051 includes an identifier field 7051a, an item field 7051b, and a content field 7051c. An identifier of the charging station 30 is recorded in the identifier field 7051a. Items related to attributes of the charging station 30 are recorded in the item field 1051a. Contents related to the attributes of the charging station 30 are recorded in the content field 7051c. By referring to the station information 7051, it is possible to grasp the current content regarding the attribute of the charging station 30.

In the case of FIG. 14, "30" is recorded in the identifier field 7051a. "Position", "access destination", "power usage rate", and "schedule" are recorded in the item field 7051b. "X1, Y1", "https://station30", "40%", a "charging device 601a: 10:00 to 15:00", a "charging device 601b: 12:00 to 14:00", and a "charging device 601c: 11:00 to 15:00" are recorded in the content field 7051c. By referring to the station information 7051, it is possible to grasp that, regarding the charging station "30", the "position" is "X1, Y1", the "access destination" by communication is "https://station30", the current "power usage rate" is "40%", and the currently reserved reservation "schedule" includes the "charging device 601a: 10:00 to 15:00", the "charging device 601b: 12:00 to 14:00", and the "charging device 601c: 11:00 to 15:00".

The station management server 40 illustrated in FIG. 12 can access the station information storage unit 705 and update the station information 7051. The station management server 40 may communicate with the charging station 30, may collect information registered in the charging station 30, and may update the station information 7051 according to the collection result.

The station management server 40 may update the station information 7051 every lapse of a predetermined cycle.

The station management server 40 may monitor the information registered in the charging station 30 and may update the station information 7051 each time a change in the information registered in the charging station 30 is detected.

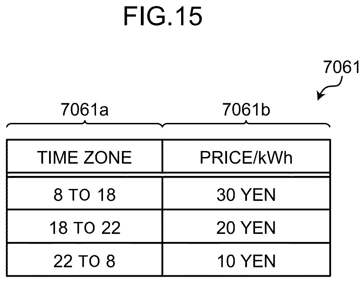

The power price storage unit 706 stores power price information 7061. The power price information 7061 is information about the power price referred to in the calculation of the usage fee of the charging device 601. The power price information 7061 is information in which a time zone and a price per unit power are associated with each other. The power price information 7061 may have a data structure as illustrated in FIG. 15. FIG. 15 is a diagram illustrating a data structure of the power price information 7061.

The power price information 7061 includes a time zone field 7061a and a price field 7061b. In the time zone field 7061a, a time zone in which the charging station 30 is used is recorded. The price field 7061b records a standard price per unit power (for example, per kWh) charged at the charging station 30. By referring to the power price information 7061, it is possible to grasp a standard price for each use time zone of the charging station 30.

In the case of FIG. 15, "8 to 18", "18 to 22", and "22 to 8" are recorded in the time zone field 7061a, and "30 yen", "20 yen", and "10 yen" are recorded in the price field 7061b. By referring to the power price information 7061, it can be identified that when the charging station 30 is used at the time of "8 to 18", the standard price per unit power is "30 yen", when the charging station 30 is used at the time of "18 to 22", the standard price per unit power is "20 yen", and when the charging station 30 is used at the time of "22 to 8", the standard price per unit power is "10 yen".

The station management server 40 may acquire basic information about a power price from a server (not illustrated) of an electric power company every lapse of a predetermined cycle (for example, every day) and may update the power price information 7061 according to the basic information about the power price.

The station management server 40 may update the power price information 7061 in real time. The station management server 40 may receive the basic information of the server power price of the power company at a timing when the power price is changed and may update the power price information 7061 in response to the reception of the basic information of the power price.

In FIG. 15, three time zones obtained by dividing one day into three are exemplified as the time zone, but the time zone included in the power price information 7061 may be two time zones obtained by dividing one day into two, or may be four or more time zones obtained by dividing one day into four or more.

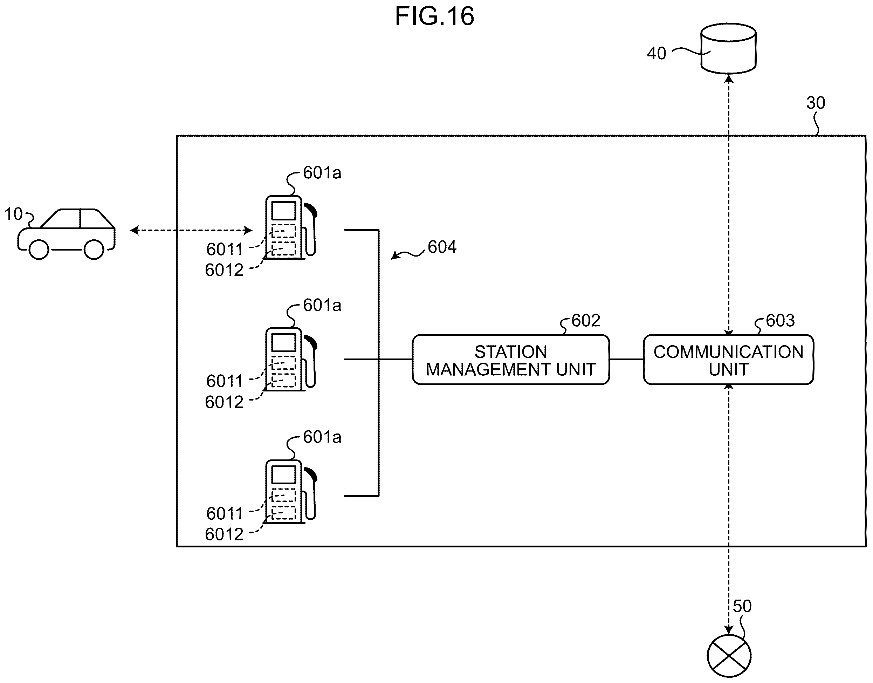

The charging station 30 may be configured as illustrated in FIG. 16. FIG. 16 is a diagram illustrating a configuration of the charging station 30.

The charging station 30 includes a plurality of charging devices 601a to 601c, a station management unit 602, a communication unit 603, and a station network 604. The plurality of charging devices 601a to 601c, the station management unit 602, and the communication unit 603 are communicably connected to each other via the station network 604. Note that the number of the charging devices 601 included in the charging station 30 is not limited to 3 (charging devices 601a to 601c) illustrated in FIG. 16, and may be 2 or less or 4 or more.

Each of the charging devices 601 can be connected to the battery 300 of the vehicle 10. Each of the charging devices 601 is connected to the power distribution network 50 via the station management unit 602 and the communication unit 603, and can receive power supply from the power distribution network 50 via the communication unit 603 and the station management unit 602. When the battery 300 of the vehicle 10 is connected, the charging device 601 can charge the battery 300 in accordance with the control of the station management unit 602.

The charging device 601 includes a charging interface 6011 and a charging circuit 6012. The charging interface 6011 has an outlet corresponding to the charging interface 301 of the battery 300. The outlet conforms to a predetermined charging standard (for example, the CHAdeMO standard, the GB/T standard, the CCS standard, or the like).

The charging circuit 6012 can turn on and off power supply to the charging interface 6011 in accordance with the control of the station management unit 602. The charging circuit 6012 can adjust an output of power supply to the charging interface 6011 in accordance with control by the station management unit 602.

The communication unit 603 functions as a communication interface for the outside of the charging station 30. The communication unit 603 can communicate with the station management server 40 via a wireless communication link and/or a wired communication line.

The communication unit 603 functions as an interface to the power distribution network 50. The communication unit 603 supplies the power received by the power distribution network 50 to each of the charging devices 601a to 601c via the station management unit 602.

The station management unit 602 manages a usage status (output, usage time) of each of the charging devices 601a to 601c, a future usage schedule, and the like.

When receiving a reservation schedule from the station management server 40, the station management unit 602 registers the reservation schedule. The station management unit 602 selects and enables any one of the charging devices 601a to 601c in accordance with the reservation schedule. When the vehicle 10 is connected to, for example, the charging device 601a and the station management unit 602 receives a charging start request from the vehicle 10 via the charging device 601a, the station management unit 602 controls the charging device 601a to supply power under the condition according to the reservation schedule in response to the charging start request. As a result, the vehicle 10 can be charged.

Upon receiving an inquiry from the station management server 40, the station management unit 602 returns registered information (for example, a reservation schedule) in response to the inquiry. As a result, the station management server 40 can access the station information storage unit 705 and can update the stored station information 7051 (refer to FIG. 14).

Upon receiving charge information from the station management server 40, the station management unit 602 displays a charge amount corresponding to charge information about a display (not illustrated) of the charging station 30. As a result, a user (for example, a driver or a passenger) of the vehicle 10 charged by the charging device 601 can be notified of the charge amount caused by the use of the charging device 601.

As described above, in the embodiment, in the charging management system 1, the station management server 40 determines a parameter related to charging of the vehicle 10 according to the security level of the vehicle 10. The station management server 40 may determine the parameter such that, as the security level of the vehicle 10 is higher, the vehicle 10 can use charging under advantageous conditions. Based on the determined parameter, the charging station 30 performs processing related to the use of the charging device 601 by the vehicle 10. As a result, the charging management system 1 can provide a preferential treatment to the vehicle 10 according to the degree of the security level regarding the use of the charging device 601 and can provide an incentive to a user of the vehicle 10 so as to improve security and to encourage the user to ensure the security. As a result, the security of the vehicle 10 can be ensured when the user of the vehicle 10 takes security measures such as updating software used in the vehicle 10.

In the embodiment, in the charging management system 1, the communication unit 701 of the station management server 40 receives a request related to the use of the charging device 601 by the vehicle 10. The scheduling unit 702, the station search unit 703, and the charge amount determination unit 704 of the station management server 40 control the charging station 30 so as to perform processing related to the use of the charging device 601 by the vehicle 10. As a result, the charging management system 1 can perform processing related to the use of the charging device 601 by the vehicle 10 in response to the request related to the use of the charging device 601.

In the embodiment, in the charging management system 1, the security level judgement unit 503 of the vehicle management server 20 judges the security level of the vehicle 10 according to management information related to the security of the vehicle 10. The scheduling unit 702, the station search unit 703, and the charge amount determination unit 704 of the station management server 40 determine a parameter related to charging of the vehicle 10 according to the determination result of the security level. The scheduling unit 702, the station search unit 703, and the charge amount determination unit 704 perform processing related to the use of the charging device 601 by the vehicle 10 according to the request related to the use of the charging device 601 and the determined parameter. As a result, the charging management system 1 can provide a preferential treatment to the vehicle 10 according to the degree of the security level regarding the use of the charging device 601.

In the embodiment, in the charging management system 1, when the security level of the vehicle 10 is the first level, the station search unit 703 of the station management server 40 determines the time during which the vehicle 10 can reserve the charging device 601 as the first time. When the security level of the vehicle 10 is the second level higher than the first level, the station search unit 703 determines the time during which the vehicle 10 can reserve the charging device 601 as the second time longer than the first time. When the time is determined as the first time, the communication unit 701 of the station management server 40 notifies the vehicle 10 of information about the first time. When the time is determined as the second time, the communication unit 701 notifies the vehicle 10 of information about the second time. As a result, the charging management system 1 can give a preferential treatment to the vehicle 10 according to the degree of the security level and can notify the vehicle 10 of the preferential treatment regarding the time during which the charging device 601 is available.

In the embodiment, in the charging management system 1, when the security level of the vehicle 10 is the first level, the scheduling unit 702 of the station management server 40 determines the charging speed of the charging device 601 as the first speed. When the security level of the vehicle 10 is the second level higher than the first level, the scheduling unit 702 determines the charging speed of the charging device 601 as the second speed higher than the first speed. If the charging speed is determined as the first speed, the scheduling unit 702 controls the charging device 601 so as to charge the vehicle 10 at the first speed. If the charging speed is determined as the second speed, the scheduling unit 702 controls the charging device 601 so as to charge the vehicle 10 at the second speed. As a result, the charging management system 1 can provide the preferential treatment to the vehicle 10 according to the degree of the security level regarding the charging speed of the charging device 601.

In the embodiment, in the charging management system 1, when the security level of the vehicle 10 is the first level, the scheduling unit 702 of the station management server 40 determines, as the first rate, the discount rate of the usage fee of the charging device 601 by the vehicle 10. When the security level of the vehicle 10 is the second level higher than the first level, the scheduling unit 702 determines, as the second rate larger than the first rate, the discount rate of the usage fee of the charging device 601 by the vehicle 10. When the discount rate is determined as the first rate, the communication unit 701 of the station management server 40 notifies the vehicle 10 of the amount of money obtained by the discount at the first rate. When the discount rate is determined as the second rate, the communication unit 701 notifies the vehicle 10 of the amount of money obtained by the discount at the second rate. As a result, the charging management system 1 can give the preferential treatment to the vehicle 10 according to the degree of the security level and can notify the vehicle 10 of the preferential treatment regarding the usage fee of the charging device 601.

In addition, in the embodiment, in the charging management system 1, the vehicle information 5051 stored in the vehicle information storage unit 505 of the vehicle management server 20 includes at least one of a version of software installed in the vehicle 10, the presence or absence of security monitoring in the vehicle 10, the presence or absence of a security breach history in the vehicle 10, the number of times of the security breach history in the vehicle 10, and information related to the freshness of the security breach history in the vehicle 10. As a result, the vehicle management server 20 can determine the security level of the vehicle 10 according to the vehicle information 5051.

Note that the security level may be standardized such that the determination criteria are unified. The standard of the security level may be installed in the vehicle management server 20 in advance. The vehicle management server 20 may determine the security level of the vehicle 10 according to the security level standard.

When determining the security level of the vehicle 10, the vehicle management server 20 may issue an electronic certificate including the determination result of the security level and may transmit the electronic certificate to the vehicle 10. In this case, in the vehicle 10, the central ECU 100 stores the electronic certificate when receiving the electronic certificate. As a result, for example, the vehicle 10 can present the electronic certificate to the charging station 30 when using the charging device 601. In response thereto, the vehicle 10 may be allowed to use the charging device 601 under advantageous conditions according to the security level indicated by the electronic certificate.

Although not illustrated, the charging management system 1 may include a plurality of station management servers 40. In this case, the server access information storage unit 504 of the vehicle management server 20 may include access information of the plurality of station management servers 40.

### (First Modification of Embodiment)

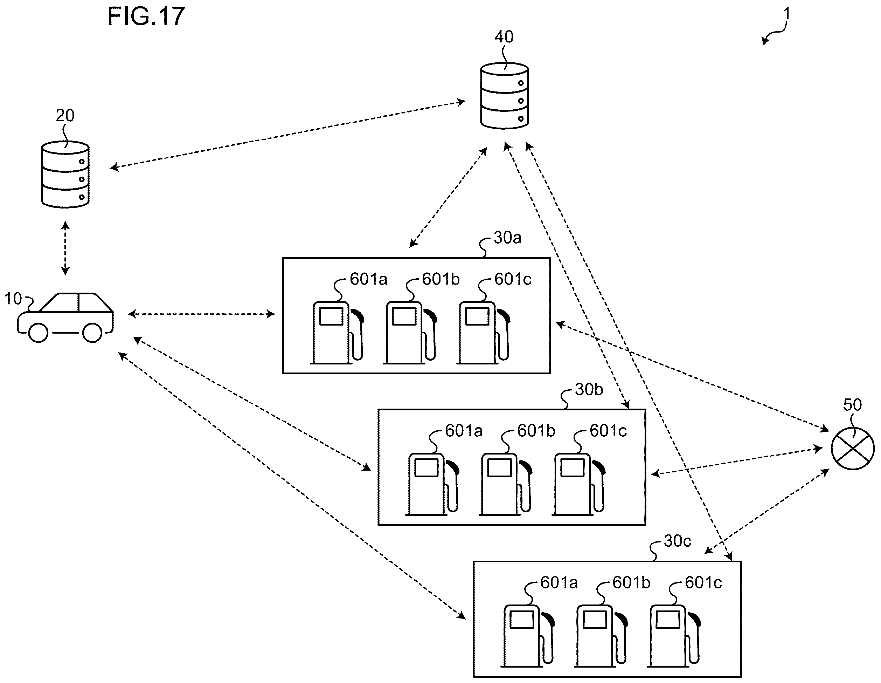

As illustrated in FIG. 17, the charging management system 1 may include a plurality of charging stations 30a to 30c. FIG. 17 is a diagram illustrating a configuration of a charging management system 1 according to a first modification of the embodiment. FIG. 17 illustrates a configuration in which the charging management system 1 includes three charging stations 30a to 30c, but the number of charging stations included in the charging management system 1 may be two or less or four or more.

In the charging management system 1, the station management server 40 and the plurality of charging stations 30a to 30c are communicably connected to each other via a wireless communication link and/or a wired communication line. The station management server 40 can manage the charging stations 30a to 30c.

In this case, the charging management system 1 may make it easy to find a charging environment for the vehicle 10 according to the degree of the security level of the vehicle 10. The charging management system 1 may increase the number of charging stations 30 that can be searched by software of a reservation application according to the degree of the security level of the vehicle 10. The charging management system 1 may widen a search range of the charging station 30 by the software of the reservation application according to the degree of the security level of the vehicle 10.

In the station management server 40 illustrated in FIG. 12, the station search unit 703 may receive the security level of the vehicle 10 from the vehicle management server 20 and may perform the search by changing a distance range to the charging station 30 available to the vehicle 10 according to the security level of the vehicle 10. The distance range means a range included in a circle having a radius corresponding to the distance around the vehicle 10.

For example, when the security level of the vehicle 10 is the first level, the station search unit 703 determines the distance range to the charging station 30 available to the vehicle 10 as the first range. The station search unit 703 searches for the charging station 30 available to the vehicle 10 in the first range in response to the distance range being determined as the first range. The station search unit 703 can search for the charging stations 30 included in the first range. The station search unit 703 generates station information including the position of each of the charging stations 30 included in the first range.

When the security level of the vehicle 10 is the second level, the station search unit 703 determines the distance range to the charging station 30 available to the vehicle 10 as the second range. The second level is higher than the first level. The second range is wider than the first range. The station search unit 703 searches for the charging station 30 available to the vehicle 10 in the second range in response to the distance range being determined as the second range. The station search unit 703 can search for the charging stations 30 included in the second range. The station search unit 703 generates station information including the position of each of the charging stations 30 included in the second range. As a result, the station information can be generated so as to favor the vehicle 10 more as compared with a case in which the security level of the vehicle 10 is the first level.

As a response to the station search request, the station search unit 703 returns the station information to the vehicle management server 20 via the communication unit 701, the wireless communication link, and/or the wired communication line. The vehicle management server 20 can transmit the station information to the vehicle 10, and the station information is displayed on the display 400 in the vehicle 10, whereby the station information including the position of each of the available charging stations 30 can be notified to a user (for example, a driver or a passenger).

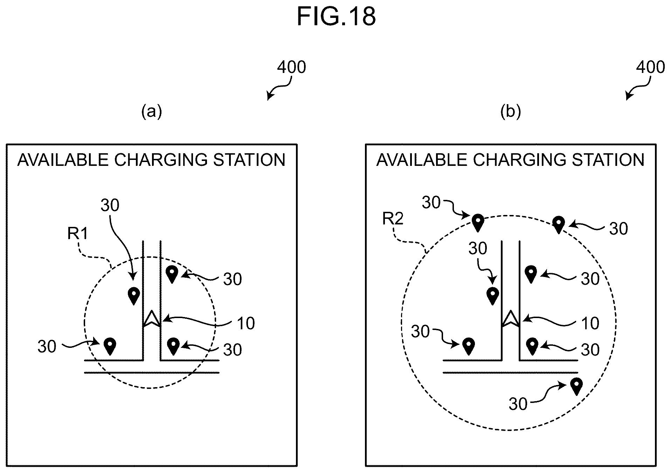

For example, when the security level of the vehicle 10 is the first level, the display 400 may display the station information as illustrated in FIG. 18(a). FIG. 18 is a diagram illustrating station information notified to the vehicle 10 according to the first modification of the embodiment. In the case of FIG. 18(a), station information including that a distance range is R1 and the number of available charging stations 30 is 4 is exemplified.

Alternatively, when the security level of the vehicle 10 is the second level higher than the first level, the display 400 may display the station information, as illustrated in FIG. 18(b). In the case of FIG. 18(b), station information including that a distance range is R2 and the number of available charging stations 30 is 7 is exemplified. The distance range R2 is wider than the distance range R1. The distance range R2 is a circle having a radius larger than that of the distance range R1. As a result, the station information retrieved to favor the vehicle 10 more than a case in which the security level of the vehicle 10 is the first level can be notified.

In this manner, the charging management system 1 makes it easy to find the charging environment for the vehicle 10 according to the degree of the security level of the vehicle 10. This also makes it possible to provide a preferential treatment to the vehicle 10 according to the degree of the security level, and to provide an incentive to a user of the vehicle 10 so as to improve security and to encourage the user to ensure the security.

In the charging management system 1, when the security level of the vehicle 10 is the first level, the station search unit 703 of the vehicle management server 20 determines the distance range to the charging device available to the vehicle 10 as the first range. When the security level of the vehicle 10 is the second level higher than the first level, the station search unit 703 determines the distance range to the charging device 601 available to the vehicle 10 as the second range wider than the first range. When the distance range is determined as the first range, the communication unit 701 of the station management server 40 notifies the vehicle 10 of information about the charging device 601 existing in the first range. When the distance range is determined as the second range, the communication unit 701 notifies the vehicle 10 of information about the charging device 601 existing in the second range. As a result, the charging management system 1 can provide a preferential treatment to the vehicle 10 according to the degree of the security level for the available charging device 601.

### (Second Modification of Embodiment)

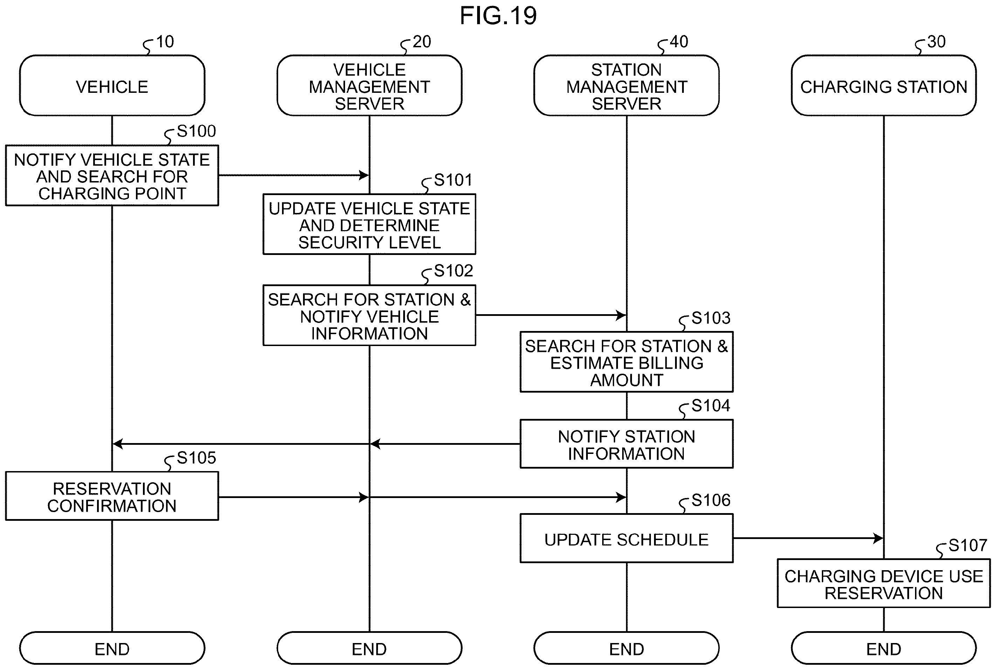

The charging management system 1 including a plurality of charging stations may operate as illustrated in FIG. 19 with respect to the use reservation of the charging station 30 by the vehicle 10. FIG. 19 is a sequence diagram illustrating an operation of the charging management system 1 according to the second modification of the embodiment.

When a search instruction for a charging point is input to the display 400, the vehicle 10 acquires management information indicating the state of the vehicle 10 in response to the search instruction, and generates a search request. The search request may include a current position of the vehicle 10. The search request may further include information indicating whether the vehicle 10 will go straight to the charging station 30 immediately after the reservation. The vehicle 10 transmits the management information about the security of the vehicle 10 and the search request for the charging point to the vehicle management server 20 via a wireless communication link (S100).

Upon receiving the management information of the vehicle 10 and the search request for the charging point, the vehicle management server 20 updates the vehicle information 5051 indicating the state of the vehicle 10 according to the management information of the vehicle 10, and determines the security level of the vehicle 10 (S101).

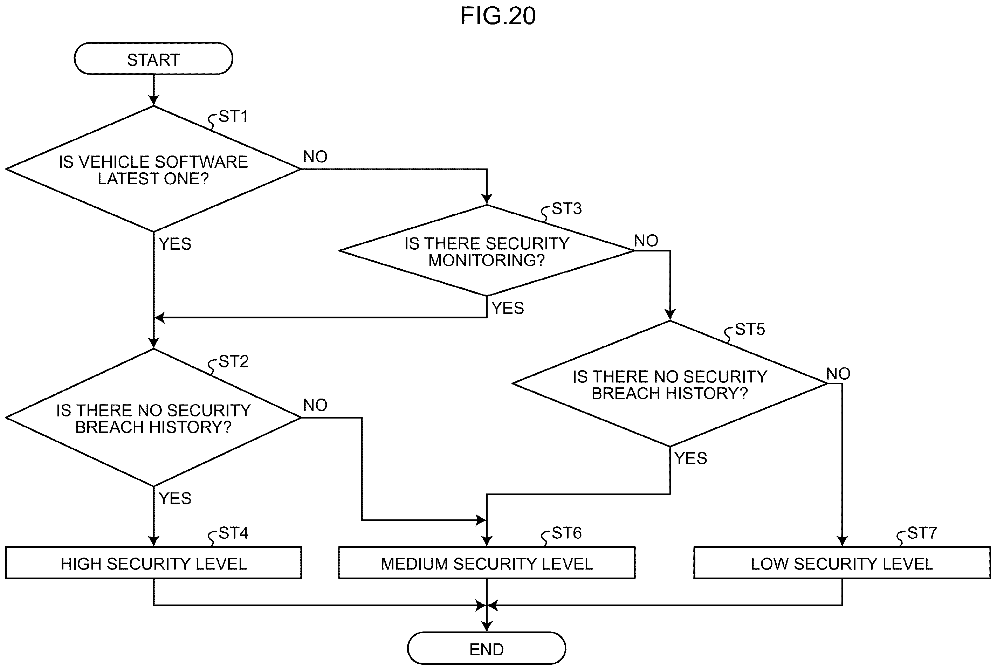

As illustrated in FIG. 20, the vehicle management server 20 may determine the security level of the vehicle 10. FIG. 20 is a flowchart illustrating processing of determining a security level according to the second modification of the embodiment. FIG. 20 illustrates processing in which the security level is ranked and determined in a plurality of stages (for example, three stages).

The vehicle management server 20 extracts information about the version of the software of the vehicle 10 from the management information of the vehicle 10. In the vehicle management server 20, the latest version information is preset for each of pieces of software that may be installed in the vehicle 10. The vehicle management server 20 determines whether the version of the software of the vehicle 10 is the latest according to the information about the version of the software of the vehicle 10 (ST1).

In a case where pieces of software are installed in the vehicle 10, and if all the pieces of software are the latest versions, the vehicle management server 20 can determine that the version of the software of the vehicle 10 is the latest version (Yes in ST1). When at least one of the pieces of software is not the latest version, the vehicle management server 20 can determine that the version of the software of the vehicle 10 is not the latest version (No in ST1).

When the version of the software of the vehicle 10 is the latest version (Yes in ST1), the vehicle management server 20 extracts information indicating the presence or absence of a security breach history from the management information of the vehicle 10. The vehicle management server 20 determines whether there is no security breach history in the vehicle 10 according to the information indicating the presence or absence of the security breach history (ST2).

When the version of the software of the vehicle 10 is not the latest version (No in ST1), the vehicle management server 20 extracts information indicating the presence or absence of security monitoring from the management information of the vehicle 10. The vehicle management server 20 determines whether there is the security monitoring in the vehicle 10 according to the information indicating whether there is the security monitoring (ST3).

When the security monitoring is performed on the vehicle 10 (Yes in ST3), the vehicle management server 20 extracts the information indicating the presence or absence of the security breach history from the management information of the vehicle 10. The vehicle management server 20 determines whether there is no security breach history in the vehicle 10 according to the information indicating the presence or absence of the security breach history (ST2).

When there is no security monitoring in the vehicle 10 (No in ST3), the vehicle management server 20 extracts the information indicating the presence or absence of the security breach history from the management information of the vehicle 10. The vehicle management server 20 determines whether there is no security breach history in the vehicle 10 according to the information indicating the presence or absence of the security breach history (ST5).

When the version of the software of the vehicle 10 is the latest one (Yes in ST1) and there is no security breach history in the vehicle 10 (Yes in ST2), the vehicle management server 20 determines that the security level of the vehicle 10 is "high" (ST4).

When the version of the software of the vehicle 10 is not the latest one (No in ST1), security monitoring is performed in the vehicle 10 (Yes in ST3), and there is no security breach history in the vehicle 10 (Yes in ST2), the vehicle management server 20 determines that the security level of the vehicle 10 is "high" (ST4).

When the version of the software of the vehicle 10 is the latest one (Yes in ST1) and there is a security breach history in the vehicle 10 (No in ST2), the vehicle management server 20 determines that the security level of the vehicle 10 is "medium" (ST6).

When the version of the software of the vehicle 10 is not the latest one (No in ST1), security monitoring is performed in the vehicle 10 (Yes in ST3), and a security breach history is present in the vehicle 10 (No in ST2), the vehicle management server 20 determines that the security level of the vehicle 10 is "medium" (ST6).

When the version of the software of the vehicle 10 is not the latest one (No in ST1), there is no security monitoring in the vehicle 10 (No in ST3), and there is no security breach history in the vehicle 10 (Yes in ST5), the vehicle management server 20 determines that the security level of the vehicle 10 is "medium" (ST6).

When the version of the software of the vehicle 10 is not the latest one (No in ST1), there is no security monitoring in the vehicle 10 (No in ST3), and there is a security breach history in the vehicle 10 (No in ST5), the vehicle management server 20 determines that the security level of the vehicle 10 is "low" (ST7).

In S101 illustrated in FIG. 19, the vehicle management server 20 further updates the vehicle information 5051 according to the determination result of the security level.

The vehicle management server 20 generates a station search request in response to a request for searching for a charging point. The station search request may include the current position of the vehicle 10. The station search request may further include information indicating whether the vehicle 10 will go straight to the charging station 30 immediately after the reservation. The vehicle management server 20 transmits the station search request and the vehicle information 5051 to the station management server 40 via a wireless communication link and/or a wired communication line (S102).

Upon receiving the station search request and the vehicle information 5051, the station management server 40 extracts information about the security level of the vehicle 10 from the vehicle information 5051. In response to the station search request, the station management server 40 searches for information about the available charging stations 30 under management, performs calculation for each of the searched charging stations 30, and generates a reservation schedule. At this time, the station management server 40 may estimate a billing amount and may include the estimated amount in the reservation schedule (S103).

At the time of the search (S103), the station management server 40 may perform the search by changing a distance range to the charging station 30 available to the vehicle 10 according to the station search request and the security level of the vehicle 10.

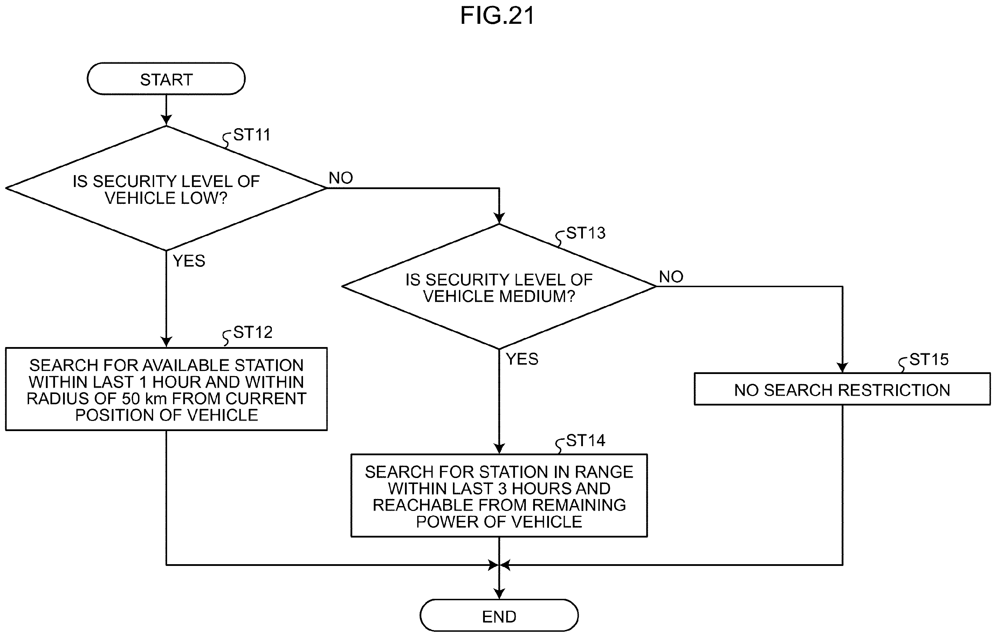

As illustrated in FIG. 21, the station management server 40 may search for the charging station 30 available to the vehicle 10. FIG. 21 is a flowchart illustrating processing of searching for a station according to the second modification of the embodiment. FIG. 21 illustrates the processing of searching for a station in a case where the security level is ranked and determined in three levels.

The station management server 40 determines whether the security level of the vehicle 10 is "low" (ST11).

When the security level of the vehicle 10 is "low" (Yes in ST11), the station management server 40 searches for one or more charging stations 30 available within the last 1 hour and within a radius of 50 km from the current position of the vehicle 10 (ST12). The station management server 40 generates station information including the searched position of each of the one or more charging stations 30.

When the security level of the vehicle 10 is not "low" (No in ST11), the station management server 40 determines whether the security level of the vehicle 10 is "medium" (ST13).

When the security level of the vehicle 10 is "medium" (Yes in ST13), the station management server 40 searches for one or more charging stations 30 that can be reached within the last 3 hours and from the remaining power of the vehicle 10 (ST14). The station management server 40 generates station information including the searched position of each of the one or more charging stations 30.

When the security level of the vehicle 10 is not "medium" (No in ST13), the station management server 40 determines that there is no search restriction (ST15). The station management server 40 generates station information including the respective positions of all the charging stations 30 under management.

Further, when the billing amount is estimated during generation of the reservation schedule (S103 illustrated in FIG. 19), the station management server 40 may calculate the estimated amount by changing the discount rate of the usage fee according to the security level of the vehicle 10.

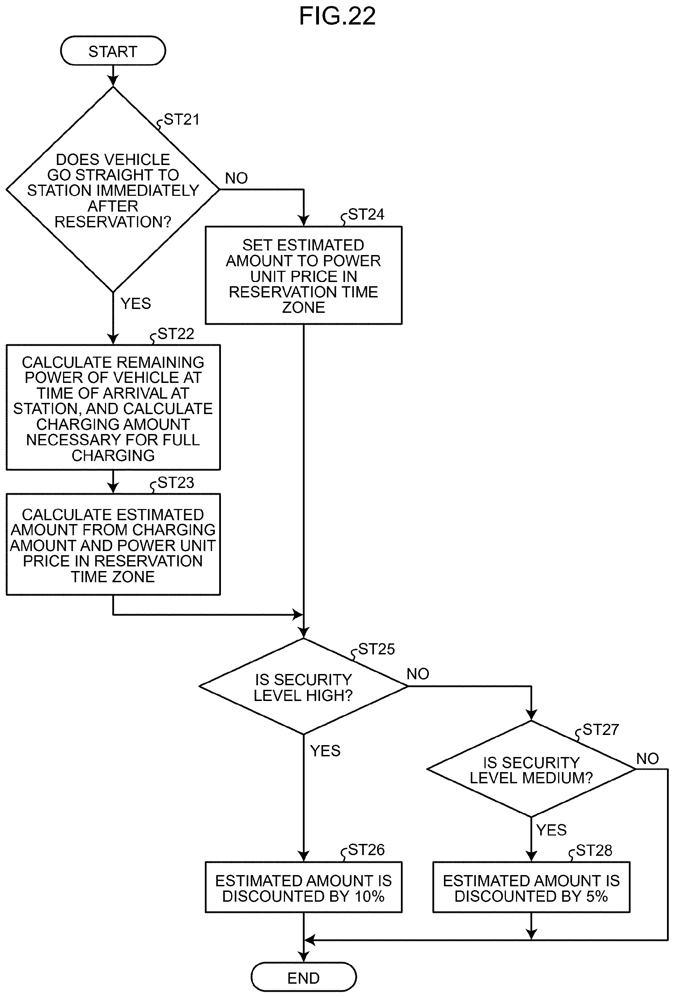

As illustrated in FIG. 22, the station management server 40 may estimate a billing amount. FIG. 22 is a flowchart illustrating processing of estimating a billing amount according to the second modification of the embodiment. FIG. 22 illustrates processing of estimating a billing amount in a case where the security level is ranked and determined in three levels.

The station management server 40 extracts, from the station search request, information indicating whether the vehicle 10 will go straight to the charging station 30 immediately after reservation. The station management server 40 determines whether the vehicle 10 will go straight to the charging station 30 immediately after reservation according to the extracted information (ST21).

When the vehicle 10 goes straight to the charging station 30 immediately after reservation (Yes in ST21), the station management server 40 extracts information about the battery remaining amount and the current position of the vehicle 10 from the vehicle information 5051. The station management server 40 calculates the remaining power of the vehicle 10 at the time of arrival at the charging station 30 according to the information about the battery remaining amount and the current position of the vehicle 10, and the position of the charging station 30, and calculates the charging amount required for full charging (ST22).

The station management server 40 calculates a standard estimated amount from the charging amount and the power unit price in the reservation time zone (ST23).

When the vehicle 10 does not go straight to the charging station 30 immediately after the reservation (No in ST21), the station management server 40 calculates a standard estimated amount from an average charging amount and a power unit price in the reservation time zone (ST23). The average charging amount is an average value of the charging amount performed by the vehicle 10 in the past, and is calculated in advance by the vehicle management server 20 and is notified to the station management server 40.

The station management server 40 determines whether the security level of the vehicle 10 is "high" (ST25).

When the security level of the vehicle 10 is not "high" (No in S25), the station management server 40 determines whether the security level of the vehicle 10 is "medium" (ST27).

When the security level of the vehicle 10 is "high" (Yes in ST25), the station management server 40 generates a reservation schedule including a standard estimate amount discounted by 10% and a discounted estimated amount as a final estimated amount, and generates station information including the reservation schedule (ST26).

When the security level of the vehicle 10 is "medium" (Yes in ST27), the station management server 40 generates a reservation schedule including a standard estimate amount discounted by 5% and a discounted estimated amount as a final estimated amount, and generates station information including the reservation schedule (ST26).

When the security level of the vehicle 10 is not "medium" (No in ST27), the station management server 40 discounts the standard estimated amount by 0%, and sets the estimated amount after the discount as the final estimated amount. In other words, the station management server 40 generates the reservation schedule including the standard estimated amount as it is as the final estimated amount, and generates the station information including the reservation schedule.

When the station information is generated in S103 illustrated in FIG. 19, the station management server 40 notifies the vehicle 10 of the station information via the vehicle management server 20 (S104).

When the station information is received, the vehicle 10 may display information such as the position of the available charging station 30 on the display 400. Upon receiving a reservation confirmation instruction including the selection of the charging station 30 via the display 400, the vehicle 10 transmits a reservation request for requesting the use reservation of the charging station 30 to the station management server 40 via the vehicle management server 20 in response to the reservation confirmation instruction (S105).

Upon receiving the reservation request, the station management server 40 generates a reservation schedule in response to the reservation request. The station management server 40 generates a schedule update request according to the reservation schedule and transmits the schedule update request to the charging station 30 (S106). The schedule update request may include a reservation schedule to be registered.

Upon receiving the schedule update request, the charging station 30 registers the reservation schedule in response to the schedule update request. As a result, in the charging station 30, the use reservation of the charging device 601 is completed (S107).

As described above, as the security level of the vehicle 10 is higher, the charging management system 1 makes a use reservation of the charging device 601 for the vehicle 10 under advantageous conditions. This also makes it possible to provide a preferential treatment to the vehicle 10 according to the degree of the security level, and to provide an incentive to a user of the vehicle 10 so as to improve security and to encourage the user to ensure the security.

### (Third Modification of Embodiment)

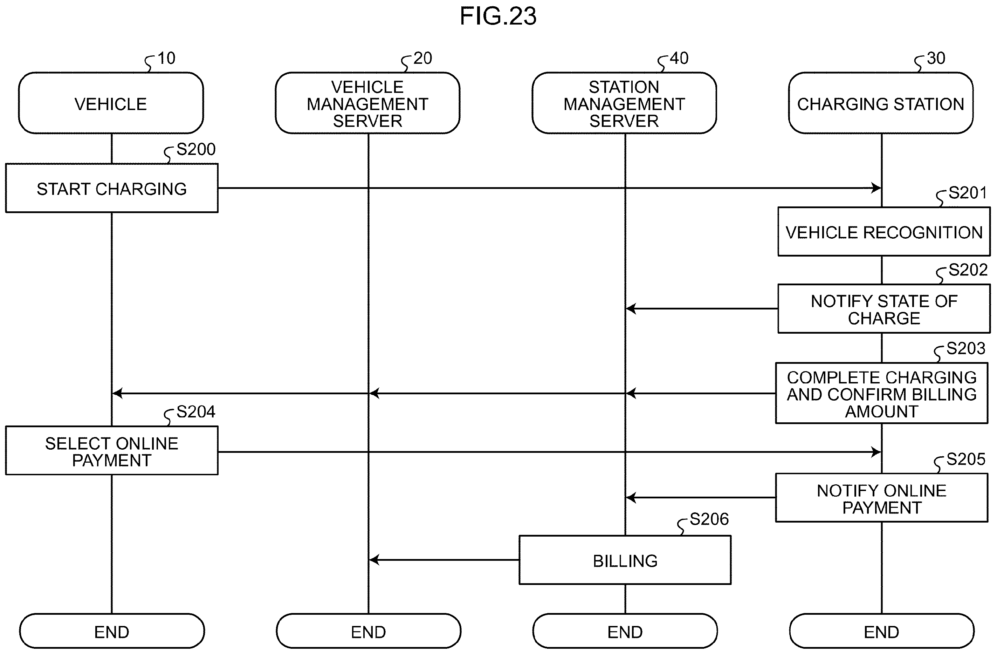

The charging management system 1 may operate as illustrated in FIG. 23 with respect to use of the charging station 30 by the vehicle 10 and payment of a fee. FIG. 23 is a sequence diagram illustrating an operation of the charging management system 1 according to a third modification of the embodiment. FIG. 23 illustrates an operation in a case where online payment is made by the vehicle 10.

When the battery 300 is connected to the charging device 601 of the charging station 30, the vehicle 10 supplies a charging start request to the charging device 601 (S200).

When receiving the charging start request from the vehicle 10 via the charging device 601a, the charging station 30 recognizes that the vehicle 10 is connected to the charging device 601 in response to the charging start request (S201).

The charging station 30 accesses the battery 300 to acquire a state of charge, and notifies the station management server 40 of the state of charge of the battery 300 of the vehicle 10 (S202).

When the state of charge of the battery 300 conforms to the reservation schedule, the charging station 30 controls the charging device 601a to supply power under the condition according to the reservation schedule. When the state of charge of the battery 300 does not conform to the reservation schedule, the charging station 30 adjusts the reservation schedule for conformance therebetween. For example, when the sum of a remaining power reception amount and a charging amount of the reservation schedule exceeds the full charging amount of the vehicle 10, the charging station 30 reduces the charging amount of the reservation schedule such that the sum is equal to or less than the full charging amount of the vehicle 10. The charging station 30 controls the charging device 601a to supply power under the condition according to the adjusted reservation schedule. As a result, the battery 300 of the vehicle 10 is charged.

When the charging of the battery 300 of the vehicle 10 is completed, the charging station 30 generates usage record information including the charging amount of the vehicle 10, and transmits the usage record information and a billing amount confirmation request for requesting the confirmation of the billing amount to the station management server 40 (S203).

Upon receiving the usage record information and the billing amount confirmation request, the station management server 40 calculates the charging amount to the vehicle 10 according to the usage record information, and generates charge information including the charge amount.

At this time, the station management server 40 may perform calculation by changing the discount rate of the usage fee of the charging station 30 according to the security level of the vehicle 10 and may generate the charge information including the charge amount. For example, the station management server 40 may increase the discount rate as the security level of the vehicle 10 is higher, and calculate, as the charge amount, a billing amount obtained by discounting the standard billing amount of the charging station 30 by the discount rate. As a result, the charge information can be generated by calculating the usage fee of the charging station 30 under more advantageous conditions as the security level of the vehicle 10 is higher.

The station management server 40 transmits the charge information to the vehicle 10 via the vehicle management server 20.

In the vehicle 10, the charge information is displayed on the display 400. In the vehicle 10, an online payment selection instruction is input (S204), and the selection instruction is transmitted from the vehicle 10 to the charging station 30.

In response to the selection instruction, the charging station 30 enters a state capable of receiving the input of online payment information. The user performs input operation or the like of the online payment information in the charging station 30, and in response to the input operation, the online payment information is notified from the charging station 30 to the station management server 40 (S205).

The station management server 40 transmits, as billing information, the online payment information to the vehicle management server 20 (S206). If the vehicle management server 20 has been entrusted with proxy of the online payment by an owner (for example, a driver) of the vehicle 10 in advance, the vehicle management server 20 executes the online payment corresponding to the online payment information about behalf of the owner of the vehicle 10. As a result, the payment for the charge amount to the vehicle 10 is completed.

As described above, as the security level of the vehicle 10 is higher, the charging management system 1 calculates the usage fee of the charging station 30 for the vehicle 10 under an advantageous condition and generates the charge information. This also makes it possible to provide a preferential treatment to the vehicle 10 according to the degree of the security level, and to provide an incentive to a user of the vehicle 10 so as to improve security and to encourage the user to ensure the security.

### (Fourth Modification of Embodiment)

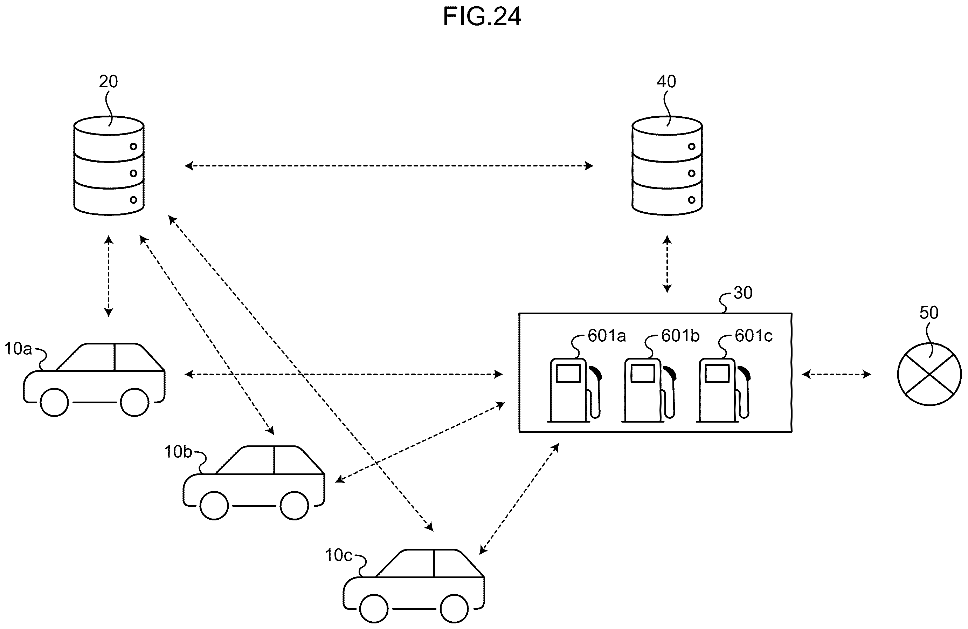

As illustrated in FIG. 24, the charging management system 1 may include a plurality of vehicles 10a to 10c. FIG. 24 is a diagram illustrating a configuration of the charging management system 1 according to a fourth modification of the embodiment. FIG. 24 illustrates a configuration in which the charging management system 1 includes three vehicles 10a to 10c, but the number of vehicles included in the charging management system 1 may be two or less or four or more.

In the charging management system 1, the vehicle management server 20 and the vehicles 10a to 10c are communicably connected to each other via a wireless communication link. The vehicle management server 20 can manage the vehicles 10a to 10c.

In this case, the charging management system 1 may give a priority to each of the vehicles 10a to 10c according to the degree of the security level. The charging management system 1 adjusts parameters related to charging of the vehicles 10a to 10c according to the priorities of the vehicles 10a to 10c. The charging management system 1 may adjust the parameters so as to include advantageous conditions as the priorities of the vehicles 10a to 10c are higher. The charging management system 1 uses the adjusted parameters of the vehicles 10a to 10c to perform processing related to the use of the charging station 30 by the vehicles 10a to 10c. As a result, the higher the security level of the vehicles 10a to 10c, the more preferential treatment can be provided.

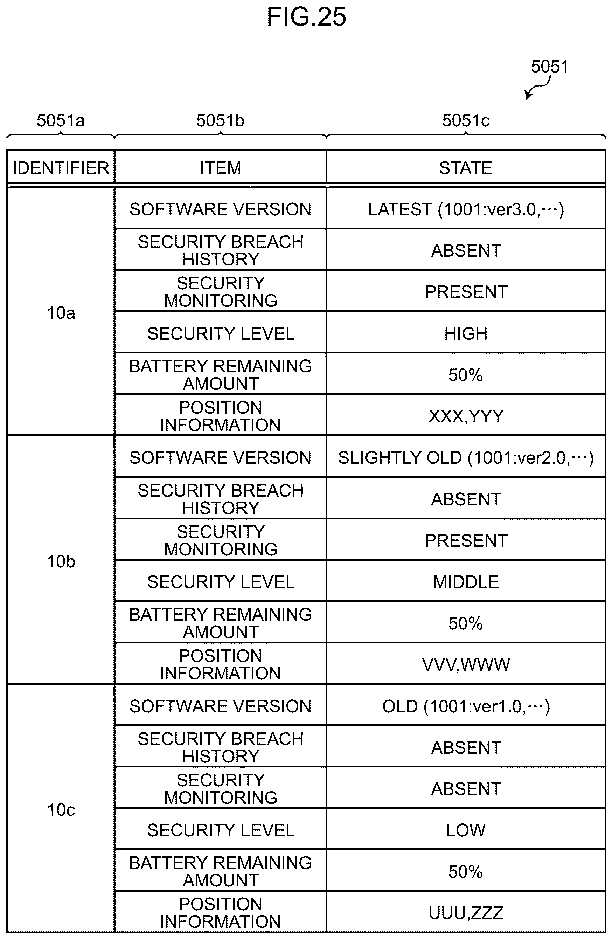

In the vehicle management server 20 illustrated in FIG. 9, the security level judgement unit 503 may judge the security levels of the vehicles 10a to 10c in ranks of plural stages, and the vehicle information storage unit 505 may store the vehicle information 5051, as illustrated in FIG. 25. FIG. 25 is a diagram illustrating a data structure of the vehicle information 5051 according to the fourth modification of the embodiment.

In the case of FIG. 25, "10a", "10b", and "10c" are recorded in an identifier field 5051a. In an item field 5051b, "software version", "security breach history", "security monitoring", "battery remaining amount", and "position" are repeatedly recorded three times. "Latest", "absent", "present", "50%", "XXX, YYY", "slightly old", "absent", "present", "50%", "VVV, WWW", "old", "absent", "absent", "50%", and "UUU, ZZZ" are recorded in a state field 5051c.

By referring to the vehicle information 5051, it can be identified that, regarding the vehicle "10a", the "software version" is "latest", the "security breach history" is "absent", the "security monitoring" service is "present", the "battery remaining amount" is "50%", and the current "position" is "XXX, YYY".

It can be identified that, regarding the vehicle "10b", the "software version" is "slightly old", the "security breach history" is "absent", the "security monitoring" service is "present", the "battery remaining amount" is "50%", and the current "position" is "VVV, WWW".

It can be identified that, regarding the vehicle "10c", the "software version" is "old", the "security breach history" is "absent", the "security monitoring" service is "absent", the "battery remaining amount" is "50%", and the current "position" is "UUU, ZZZ".

The security level judgement unit 503 may access the vehicle information storage unit 505, may refer to the vehicle information 5051, and may judge the security levels of the vehicles 10a to 10c according to the vehicle information 5051. The security level judgement unit 503 may judge the security levels of the vehicles 10a to 10c according to the states of the items the "software version", the "security breach history", and the "security monitoring", and may add the judgement result to the vehicle information 5051.

In the case of FIG. 25, regarding the vehicle "10a", since the "software version" is "latest", the "security breach history" is "absent", and the "security monitoring" service is "present", the security level judgement unit 503 judges that the "security level" is "high". In accordance with this judgement, the security level judgement unit 503 adds the item "security level" and the state "high" to the vehicle information 5051 of the vehicle "10a".

Regarding the vehicle "10b", since the "software version" is "slightly old", the "security breach history" is "absent", and the "security monitoring" service is "present", the security level judgement unit 503 judges that the "security level" is "medium". In accordance with this judgement, the security level judgement unit 503 adds the item "security level" and the state "medium" to the vehicle information 5051 of the vehicle "10b".

Regarding the vehicle "10c", since the "software version" is "old", the "security breach history" is "absent", and the "security monitoring" service is "absent", the security level judgement unit 503 judges that the "security level" is "low". In accordance with this judgement, the security level judgement unit 503 adds the item "security level" and the state "low" to the vehicle information 5051 of the vehicle "10c".

The communication unit 501 may refer to the vehicle information storage unit 505, may acquire the vehicle information 5051 from the vehicle information storage unit 505, and may transmit the vehicle information 5051 to the station management server 40 via a wireless communication link and/or a wired communication line. The vehicle information 5051 includes determination results of the security levels of the vehicles 10a to 10c.

As a result, the station management server 40 can give a priority to each of the vehicles 10a to 10c according to the security level of the security level of the vehicles 10a to 10c. For example, the station management server 40 may set the priorities of the vehicles 10a, 10b, and 10c to "high", "medium", and "low", respectively, in response to the security levels of the vehicles 10a, 10b, and 10c being "high", "medium", and "low", respectively.

The station management server 40 may adjust the reservation schedules of the vehicles 10a to 10c according to the priorities of the vehicles 10a to 10c. The station management server 40 adjusts the reservation schedule for each of the vehicles 10a to 10c such that, as the priority is higher, more advantageous conditions are included. The station management server 40 notifies the charging station 30 of the adjusted reservation schedule for each of the vehicles 10a to 10c. As a result, each of the vehicles 10a to 10c can use the charging station 30 according to the adjusted reservation schedule.

As described above, the charging management system 1 can provide the preferential treatment as the security level is higher in the vehicles 10a to 10c. This also makes it possible to give an incentive to the users of the respective vehicles 10a to 10c so as to improve security and to encourage the user to ensure security.

Further, in the charging management system 1, the security level judgement unit 503 of the vehicle management server 20 judges the security levels of the plurality of vehicles 10 according to management information related to the security of the plurality of vehicles 10. The scheduling unit 702, the station search unit 703, and the charge amount determination unit 704 of the station management server 40 adjust parameters related to charging of the plurality of vehicles 10 according to the determined security levels of the plurality of vehicles 10. The scheduling unit 702, the station search unit 703, and the charge amount determination unit 704 perform processing related to the use of the charging device 601 by the plurality of vehicles 10 using the adjusted parameters of the plurality of vehicles 10. As a result, the charging management system 1 can provide the preferential treatment to the plurality of vehicles 10 according to the degree of the security level with respect to the use of the charging device 601.

### (Fifth Modification of Embodiment)

The charging management system 1 including a plurality of vehicles may perform an operation basically similar to that of the second modification of the embodiment for each vehicle with respect to the use reservation of the charging station 30 by the vehicle. In other words, in the charging management system 1, a plurality of vehicles may be able to make a use reservation of the charging station 30 in parallel. In this case, adjustment between the vehicles is performed at the time of schedule update (S106).

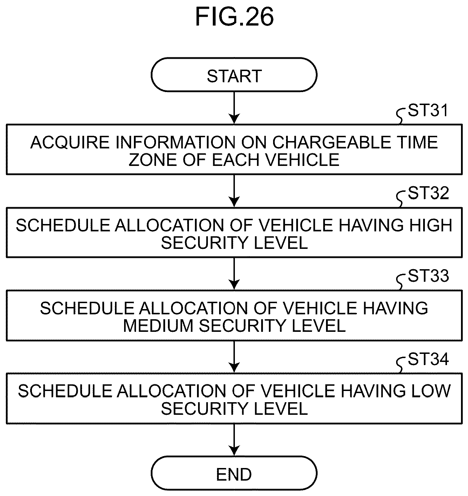

As illustrated in FIG. 26, the station management server 40 may perform schedule allocation with respect to a plurality of vehicles so as to adjust the reservation schedule among the vehicles. FIG. 26 is a flowchart illustrating schedule allocation processing in the fifth modification of the embodiment. FIG. 26 illustrates schedule allocation processing in a case where the security level is ranked and determined in three stages. Similarly to the fourth modification of the embodiment, FIG. 26 illustrates a case in which the charging management system 1 includes three vehicles 10a, 10b, and 10c, and the security levels of the three vehicles 10a, 10b, and 10c are determined to be "high", "medium", and "low", respectively.

Upon receiving a reservation request from the vehicles 10a, 10b, and 10c via the vehicle management server 20, the station management server 40 acquires information about time zones at which the vehicles 10a, 10b, and 10c can be charged in response to the reservation request (ST31).

The station management server 40 performs schedule allocation with respect to the vehicles 10a, 10b, and 10c in descending order of the security level.

First, the station management server 40 performs schedule allocation with respect to the vehicle 10a having the security level "high" (ST32). The station management server 40 allocates, as the use time of the vehicle 10a, the time requested by the reservation request of the vehicle 10a among the available time of the charging station 30 allocated to the vehicle 10a. The station management server 40 may allocate the charging output to the vehicle 10a with high output from a time zone when the power price is low among available time zones. The station management server 40 creates a reservation schedule of the vehicle 10a according to the allocation result of the charging output.

Next, the station management server 40 performs schedule allocation with respect to the vehicle 10b having the security level "medium" (ST33). The station management server 40 allocates, as the use time of the vehicle 10b, the time requested by the reservation request of the vehicle 10b among the available time of the charging station 30 except for the time allocated to the vehicle 10a. The station management server 40 may allocate the charging output to the vehicle 10a with high output from a time zone when the power price is low among available time zones. The station management server 40 creates a reservation schedule of the vehicle 10b according to the allocation result of the charging output.

Next, the station management server 40 performs schedule allocation with respect to the vehicle 10b having the security level "low" (ST34). The station management server 40 allocates, as the use time of the vehicle 10c, the time requested by the reservation request of the vehicle 10c among the available time of the charging station 30 except for the time allocated to each of the vehicles 10a and 10b. The station management server 40 may allocate the charging output to the vehicle 10c with high output from a time zone when the power price is low among available time zones. The station management server 40 creates a reservation schedule of the vehicle 10c according to the allocation result of the use time.

When adjustment among the vehicles is completed, the station management server 40 generates a schedule update request for each of the vehicles 10a, 10b, and 10c according to the reservation schedule, and transmits the schedule update request to the charging station 30 (S106). The schedule update request may include a reservation schedule to be registered.

Upon receiving the schedule update request for each of the vehicles 10a, 10b, and 10c, the charging station 30 registers the reservation schedule in response to the schedule update request. As a result, in the charging station 30, the use reservation of the charging device 601 is completed (S107).

As described above, the charging management system 1 can provide the preferential treatment as the security level is higher in the vehicles 10a to 10c. This also makes it possible to give an incentive to the users of the respective vehicles 10a to 10c so as to improve security and to encourage the user to ensure security.

### (Sixth Modification of Embodiment)

The charging management system 1 having a plurality of vehicles may basically perform the same operation as that of the third modification of the embodiment for each vehicle with respect to the use of the charging station 30 by the vehicle, but in a case where the power supply and demand are tight, adjustment between the vehicles is performed with respect to the charging output during charging (S202).

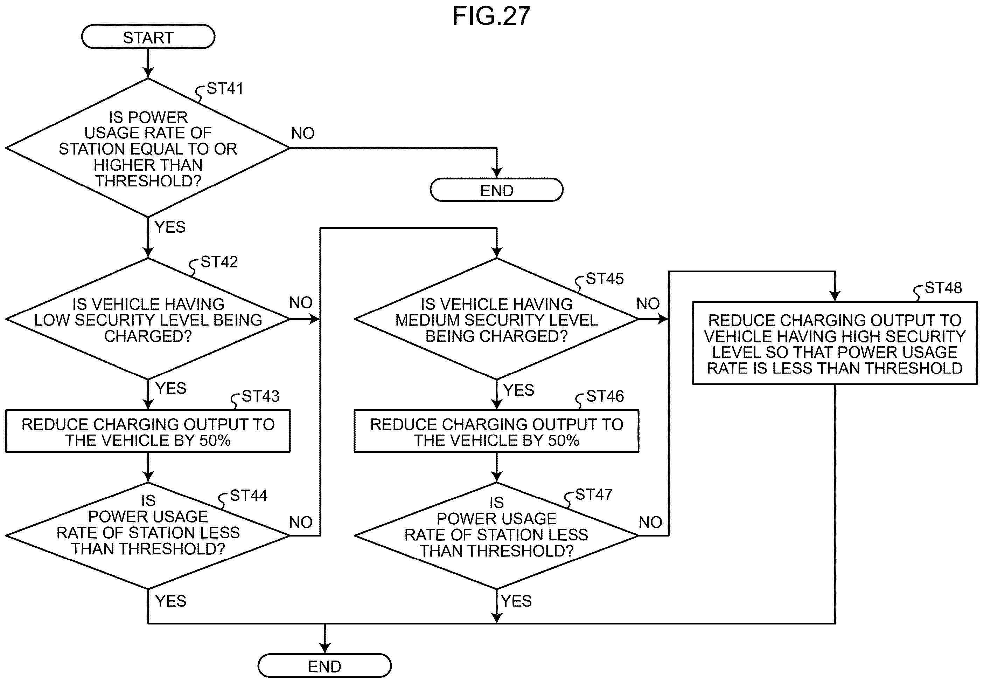

When the power supply and demand are tight, the station management server 40 may adjust the charging output among the vehicles, as illustrated in FIG. 27. FIG. 27 is a flowchart illustrating charging output adjustment processing according to a sixth modification of the embodiment. FIG. 27 illustrates charging output adjustment processing in a case where the security level is ranked and determined in three stages. Similarly to the sixth modification of the embodiment, FIG. 27 illustrates a case in which the charging management system 1 includes three vehicles 10a, 10b, and 10c, and the security levels of the three vehicles 10a, 10b, and 10c are determined to be "high", "medium", and "low", respectively.

The station management server 40 collects information related to power usage rate from the charging station 30. The station management server 40 determines whether the power usage rate is equal to or higher than a threshold (for example, 80%) (ST41).

When the power usage rate is less than the threshold (No in ST41), the station management server 40 determines that the power supply and demand are not tight, and ends the processing.

When the power usage rate is equal to or higher than the threshold (Yes in ST41), the station management server 40 determines that the power supply and demand are tight, and reduces the charging output in ascending order of the security level, thereby adjusting the charging output among the vehicles.

The station management server 40 inquires the charging station 30 about a current usage status, and acquires usage status information regarding the current usage status. The station management server 40 determines whether the vehicle having the security level "low" is being charged according to the usage status information (ST42).

When the vehicle having the security level "low" is being charged (Yes in ST42), the station management server 40 reduces the charging output to the corresponding vehicle by 50% (ST43).

The station management server 40 collects information related to power usage rate from the charging station 30. The station management server 40 determines whether the power usage rate is equal to or higher than a threshold (for example, 80%) (ST44).

When the power usage rate is less than the threshold (Yes in ST44), the station management server 40 determines that the power supply and demand tightness has been resolved and ends the processing.

When the vehicle having the security level "low" is not being charged (No in ST42) or the power usage rate is equal to or higher than the threshold (No in ST44), the station management server 40 inquires the charging station 30 about a current usage status and acquires usage status information regarding the current usage status. The station management server 40 determines whether the vehicle having the security level "medium" is being charged according to the usage status information (ST45).

When the vehicle having the security level "medium" is being charged (Yes in ST45), the station management server 40 reduces the charging output to the corresponding vehicle by 50% (ST46).

The station management server 40 collects information related to power usage rate from the charging station 30. The station management server 40 determines whether the power usage rate is equal to or higher than a threshold (for example, 80%) (ST47).

When the power usage rate is less than the threshold (Yes in ST47), the station management server 40 determines that the power supply and demand tightness has been resolved and ends the processing.

When the vehicle having the security level "medium" is not being charged (No in ST45) or the power usage rate is equal to or higher than the threshold (No in ST47), the station management server 40 inquires the charging station 30 about a current usage status and acquires usage status information regarding the current usage status. Based on the usage status information, the station management server 40 reduces the charging output to the vehicle having the security level "high" such that the power usage rate is less than the threshold (ST48).

As a result, when the power supply and demand tightness is resolved, the charging management system 1 performs charging (S202) and subsequent operations in the same manner as in the third modification of the embodiment.

Note that FIG. 27 illustrates an operation of performing control to suppress charging output from a vehicle having a low security level when power supply and demand are tight. However, the charging output may be suppressed by slope distribution according to the security level. For example, the necessary reduction amount may be reduced by an allocation of "vehicle having security level "low" : "vehicle having security level "medium" : "vehicle having security level "high" = 60 : 30 : 10. The numerical values of the threshold value "80%" and the reduction amount "50%" illustrated in FIG. 27 can be optionally set and can be changed with the ease of resolving the power supply and demand tightness.

As described above, as the security level is higher in the vehicles 10a to 10c, the charging management system 1 can postpone the reduction of the charging output at the time of power supply and demand tightness, and can relatively provide a preferential treatment. This also makes it possible to give an incentive to the users of the respective vehicles 10a to 10c so as to improve security and to encourage the user to ensure security.

Further, in the charging management system 1, when the power supply and demand are tight, the station management server 40 adjusts the parameters related to the charging of the vehicles 10a to 10c according to the priorities of the vehicles 10a to 10c capable of being charged, respectively. The station management server 40 performs processing related to the vehicles 10a to 10c using the charging device 601 by using the adjusted parameters of the vehicles 10a to 10c. As a result, the charging management system 1 can provide a preferential treatment to each of the vehicles 10 according to the degree of priority with respect to the use of the charging device 601.

In addition, in the charging management system 1, the vehicle management server 20 determines the priorities of the vehicles 10a to 10c according to the management information related to the security of the vehicles 10a to 10c. When power supply and demand are tight, the station management server 40 adjusts parameters related to charging of the vehicles 10a to 10c according to the priorities of the vehicles 10a to 10c, determined by the vehicle management server 20. As a result, the charging management system 1 can provide a preferential treatment to each of the vehicles 10 according to the degree of the priority corresponding to the security level with respect to the use of the charging device 601.

### (Seventh Modification of Embodiment)

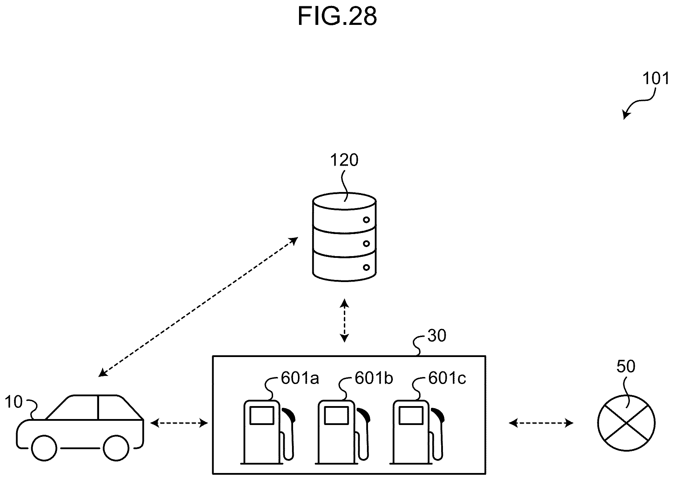

In the charging management system 101, as illustrated in FIG. 28, the vehicle management server 20 and the station management server 40 may be integrated into the server 120. FIG. 28 is a diagram illustrating a configuration of the charging management system 101 according to a seventh modification of the embodiment. In this case, the vehicle 10 and the server 120 are communicably connected to each other via a wireless communication link. The server 120 and the charging station 30 are communicably connected to each other via a wireless communication link and/or a wired communication line. The server 120 may include the configuration illustrated in FIG. 9 and the configuration illustrated in FIG. 12. The communication unit 501 and the communication unit 701 may be integrated into one communication unit.

Note that the server 120 is similar to the embodiment in that the parameter may be determined such that, as the security level of the vehicle 10 is higher, the vehicle 10 can use charging under advantageous conditions.

As described above, the charging management system 101 can provide a preferential treatment to the vehicle 10 according to the degree of the security level regarding the use of the charging station 30 and can provide an incentive to a user of the vehicle 10 so as to improve security and to encourage the user to ensure the security.

### (Eighth Modification of Embodiment)

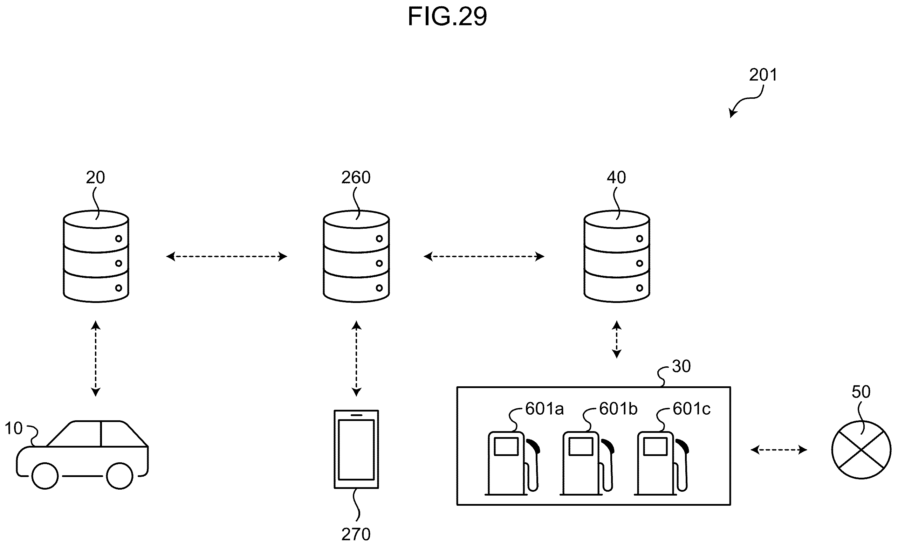

In a charging management system 201, as illustrated in FIG. 29, a server 260 connectable to a user terminal 270 may be added between the vehicle management server 20 and the station management server 40. FIG. 29 is a diagram illustrating a configuration of the charging management system 201 according to an eighth modification of the embodiment.

In this case, the vehicle management server 20 and the server 260 are communicably connected to each other via a wireless communication link and/or a wired communication line. The server 260 and the station management server 40 are communicably connected to each other via a wireless communication link and/or a wired communication line. The user terminal 270 and the server 260 are communicably connected to each other via a wireless communication link.

The information to be notified to the display 400 may be notified to the user terminal 270 via the server 260 instead of giving a notification to the display 400 or in addition to giving a notification to the display 400.

The server 260 can execute processing of an intermediary service between the vehicle management server 20 and the station management server 40. In the user terminal 270, an application that provides a user interface for using the processing of the intermediary service may be set. When receiving a use request of the intermediary service, the user terminal 270 transmits the use request to the server 260 via the wireless communication link and/or the wired communication line. The server 260 may execute processing of the intermediary service in response to the use request and may transmit information corresponding to the execution result to the station management server 40 via the wireless communication link and/or the wired communication line.

For example, in the user terminal 270, a user ID is set in advance. In the vehicle management server 20, the vehicle information 5051 (refer to FIG. 11) stored in the vehicle information storage unit 505 may be information in which a user ID is further associated in addition to the identifier of the vehicle 10, the item regarding the attribute of the vehicle 10, and the state thereof. When receiving the request for the use reservation of the charging device 601 from the user, the user terminal 270 generates a reservation request including the request for the use reservation of the charging device 601 and the user ID, and transmits the reservation request to the server 260 via the wireless communication link and/or the wired communication line. Upon receiving the reservation request, the server 260 inquires the vehicle management server 20 about the vehicle corresponding to the user ID included in the reservation request and the security level thereof via the wireless communication link and/or the wired communication line. The vehicle management server 20 accesses the vehicle information storage unit 505, and looks up the vehicle information 5051 to return information related to the identifier of the vehicle corresponding to the user ID and the security level thereof as a response. The server 260 may determine a parameter according to the identifier of the vehicle and the information related to the security level of the vehicle such that the vehicle 10 can be charged and used under an advantageous condition as the security level of the vehicle 10 is higher, and may transmit the parameter to the station management server 40. Upon receiving the parameter, the station management server 40 may perform processing in accordance with the parameter in the same manner as in the embodiment.

As described above, the charging management system 201 can provide a preferential treatment to the vehicle 10 according to the degree of the security level regarding the use of the charging station 30 and can provide an incentive to a user of the vehicle 10 so as to improve security and to encourage the user to ensure the security.

### (Ninth Modification of Embodiment)

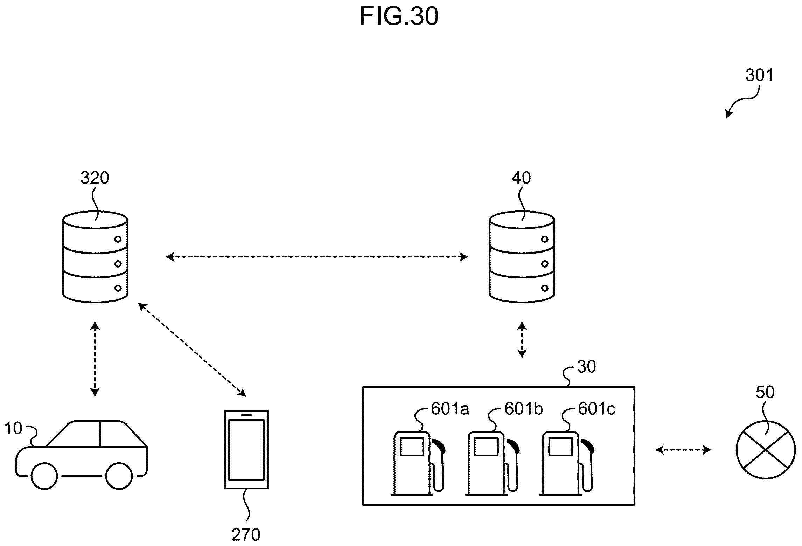

In a charging management system 301, as illustrated in FIG. 30, the vehicle management server 20 and the server 260 may be integrated into a server 320. FIG. 30 is a diagram illustrating a configuration of the charging management system 301 according to a ninth modification of the embodiment.

In this case, the server 320 and the station management server 40 are communicably connected to each other via a wireless communication link and/or a wired communication line. The user terminal 270 and the server 320 are communicably connected to each other via a wireless communication link.

The information to be notified to the display 400 may be notified to the user terminal 270 via the server 320 instead of giving a notification to the display 400 or in addition to giving a notification to the display 400.

The server 320 can execute predetermined processing corresponding to integration of the vehicle management server 20 and the server 260. In the user terminal 270, an application that provides a user interface for using predetermined processing may be set. When receiving a use request of the predetermined processing, the user terminal 270 transmits the use request to the server 320 via the wireless communication link and/or the wired communication line. The server 320 may execute the predetermined processing in response to the use request and may transmit information corresponding to the execution result to the station management server 40 via the wireless communication link and/or the wired communication line.

For example, in the user terminal 270, a user ID is set in advance. In the server 320, the vehicle information 5051 (refer to FIG. 11) stored in the vehicle information storage unit 505 may be information in which the user ID is further associated in addition to the identifier of the vehicle 10, the item regarding the attribute of the vehicle 10, and the state thereof. When receiving the request for the use reservation of the charging device 601 from the user, the user terminal 270 generates a reservation request including the request for the use reservation of the charging device 601 and the user ID, and transmits the reservation request to the server 320 via the wireless communication link and/or the wired communication line. When receiving the reservation request, the server 320 accesses the vehicle information storage unit 505 and looks up the vehicle information 5051 to obtain the identifier of the vehicle corresponding to the user ID and the security level of the vehicle. The server 260 may determine a parameter according to the identifier of the vehicle and the information related to the security level of the vehicle such that the vehicle 10 can be charged and used under an advantageous condition as the security level of the vehicle 10 is higher, and may transmit the parameter to the station management server 40. Upon receiving the parameter, the station management server 40 may perform processing in accordance with the parameter in the same manner as in the embodiment.

As described above, the charging management system 301 can provide a preferential treatment to the vehicle 10 according to the degree of the security level regarding the use of the charging station 30 and can provide an incentive to a user of the vehicle 10 so as to improve security and to encourage the user to ensure the security.

Note that, in the above-described embodiment and the modifications thereof, a case in which the present disclosure is applied to the security measure in the vehicle 10 (for example, an automobile) has been exemplified, but the application range of the present disclosure is not limited thereto. For example, the present disclosure may be applied to a security measure in any mobile body 410 that can be charged, has a communication function, and is movable. In addition to the vehicle (for example, an automobile) 10, the mobile body 410 includes a construction machine, an agricultural machine, a ship, a submarine, a railway, a linear motor car, an airplane, a glider, a hovercraft, a spacecraft, and the like.

For example, in the charging management system 1, the station management server 40 determines a parameter related to charging of the mobile body 410 according to the security level of the mobile body 410. The station management server 40 may determine the parameter such that, as the security level of the mobile body 410 is higher, the mobile body 410 can be more charged and used under advantageous conditions. Based on the determined parameter, the charging station 30 performs processing related to the use of the charging device 601 by the mobile body 410. As a result, the charging management system 1 can provide a preferential treatment to the mobile body 410 according to the degree of the security level regarding the use of the charging device 601 and can provide an incentive to a user of the mobile body 410 so as to improve security and to encourage the user to ensure the security. As a result, the security of the mobile body 410 can be ensured by the user of the mobile body 410 taking security measures such as updating software used in the mobile body 410.

In addition, in the charging management system 1, the communication unit 701 of the station management server 40 receives a request related to the use of the charging device 601 by the mobile body 410. The scheduling unit 702, the station search unit 703, and the charge amount determination unit 704 of the station management server 40 control the charging station 30 so as to perform processing related to the use of the charging device 601 by the mobile body 410. As a result, the charging management system 1 can perform processing related to the use of the charging device 601 by the mobile body 410 in response to the request related to the use of the charging device 601.

In addition, in the charging management system 1, the security level judgement unit 503 of the vehicle management server 20 judges the security level of the mobile body 410 according to the management information related to the security of the mobile body 410. The scheduling unit 702, the station search unit 703, and the charge amount determination unit 704 of the station management server 40 determine a parameter related to charging of the mobile body 410 according to the determination result of the security level. The scheduling unit 702, the station search unit 703, and the charge amount determination unit 704 perform processing related to the use of the charging device 601 by the mobile body 410 according to the request related to the use of the charging device 601 and the determined parameter. As a result, the charging management system 1 can provide a preferential treatment to the mobile body 410 according to the degree of the security level regarding the use of the charging device 601.

Further, in the charging management system 1, when the security level of the mobile body 410 is the first level, the station search unit 703 of the vehicle management server 20 determines the distance range to the charging device available to the mobile body 410 as the first range. When the security level of the mobile body 410 is the second level higher than the first level, the station search unit 703 determines the distance range to the charging device 601 available to the mobile body 410 as the second range wider than the first range. When the distance range is determined as the first range, the communication unit 701 of the station management server 40 notifies the mobile body 410 of information about the charging device 601 existing in the first range. When the distance range is determined as the second range, the communication unit 701 notifies the mobile body 410 of information about the charging device 601 existing in the second range. As a result, the charging management system 1 can provide a preferential treatment to the mobile body 410 according to the degree of the security level for the available charging device 601.

In the embodiment, in the charging management system 1, when the security level of the mobile body 410 is the first level, the station search unit 703 of the station management server 40 determines the time during which the mobile body 410 can reserve the charging device 601 as the first time. When the security level of the mobile body 410 is the second level higher than the first level, the station search unit 703 determines the time during which the mobile body 410 can reserve the charging device 601 as the second time longer than the first time. When the time is determined as the first time, the communication unit 701 of the station management server 40 notifies the mobile body 410 of information about the first time. When the time is determined as the second time, the communication unit 701 notifies the mobile body 410 of information about the second time. As a result, the charging management system 1 can provide a preferential treatment to the mobile body 410 according to the degree of the security level and can notify the mobile body 410 of the preferential treatment regarding the time during which the charging device 601 is available.

In the charging management system 1, when the security level of the mobile body 410 is the first level, the scheduling unit 702 of the station management server 40 determines the charging speed of the charging device 601 as the first speed. When the security level of the mobile body 410 is the second level higher than the first level, the scheduling unit 702 determines the charging speed of the charging device 601 as the second speed higher than the first speed. In a case where the charging speed is determined as the first speed, the scheduling unit 702 controls the charging device 601 to charge the mobile body 410 at the first speed. In a case where the charging speed is determined as the second speed, the scheduling unit 702 controls the charging device 601 to charge the mobile body 410 at the second speed. As a result, the charging management system 1 can provide the preferential treatment to the mobile body 410 according to the degree of the security level regarding the charging speed of the charging device 601.

In addition, in the charging management system 1, when the security level of the mobile body 410 is the first level, the scheduling unit 702 of the station management server 40 determines, as the first rate, the discount rate of the usage fee of the charging device 601 by the mobile body 410. When the security level of the mobile body 410 is the second level higher than the first level, the scheduling unit 702 determines, as the second rate larger than the first rate, the discount rate of the usage fee of the charging device 601 by the mobile body 410. When the discount rate is determined as the first rate, the communication unit 701 of the station management server 40 notifies the mobile body 410 of the amount of money obtained by the discount at the first rate. When the discount rate is determined as the second rate, the communication unit 701 notifies the mobile body 410 of the amount of money obtained by the discount at the second rate. As a result, the charging management system 1 can provide a preferential treatment to the mobile body 410 according to the degree of the security level and can notify the mobile body 410 of the preferential treatment regarding the usage fee of the charging device 601.

In addition, in the charging management system 1, the vehicle information 5051 stored in the vehicle information storage unit 505 of the vehicle management server 20 includes at least one of a version of software installed in mobile body 410, the presence or absence of security monitoring in mobile body 410, the presence or absence of a security breach history in mobile body 410, the number of times of the security breach history in mobile body 410, and information related to the freshness of the security breach history in mobile body 410. As a result, the vehicle management server 20 can determine the security level of mobile body 410 according to the vehicle information 5051.

In addition, the charging management system 1 may include a plurality of mobile bodies 410. In this case, the security level judgement unit 503 of the vehicle management server 20 judges the security levels of the mobile bodies 410 according to the management information regarding the security of the mobile bodies 410. The scheduling unit 702, the station search unit 703, and the charge amount determination unit 704 of the station management server 40 adjust parameters related to charging of the vehicles 10 according to the determined security levels of the vehicles 10. The scheduling unit 702, the station search unit 703, and the charge amount determination unit 704 perform processing related to the use of the charging device 601 by the vehicles 10 using the adjusted parameters of the vehicles 10. As a result, the charging management system 1 can provide the preferential treatment to the vehicles 10 according to the degree of the security level with respect to the use of the charging device 601.

Further, in the charging management system 1, when the power supply and demand are tight, the station management server 40 may adjust the parameters related to charging of the mobile bodies 410 according to the priorities of the mobile bodies 410 that can be charged, respectively. In this case, the station management server 40 performs processing related to the mobile bodies 410 using the charging device 601 by using the adjusted parameters of the mobile bodies 410. As a result, the charging management system 1 can provide a preferential treatment to each of the mobile bodies 410 according to the degree of the priority with respect to the use of the charging device 601.

In addition, in the charging management system 1, the vehicle management server 20 determines the priorities of the mobile bodies 410 according to the management information related to the security of the mobile bodies 410. When power supply and demand are tight, the station management server 40 adjusts parameters related to charging of the mobile bodies 410 according to the priorities of the mobile bodies 410, determined by the vehicle management server 20. As a result, the charging management system 1 can provide a preferential treatment to each of the mobile bodies 410 according to the degree of the priority corresponding to the security level with respect to the use of the charging device 601.

Although some embodiments of the present invention have been described, these embodiments have been presented as examples, and are not intended to limit the scope of the invention. These embodiments can be implemented in various other forms, and various omissions, substitutions, and changes can be made without departing from the gist of the invention. These embodiments and modifications thereof are included in the scope and gist of the invention, and are included in the invention described in the claims and the scope equivalent thereto.

### EXPLANATIONS OF LETTERS OR NUMERALS

1, 101, 201 CHARGING MANAGEMENT SYSTEM
10, 10a, 10b, 10c VEHICLE
20 CHARGING MANAGEMENT SERVER
30, 30a, 30b, 30c CHARGING STATION
40 STATION MANAGEMENT SERVER
50 POWER DISTRIBUTION NETWORK
120 SERVER
260 SERVER
270 USER TERMINAL

## Claims

1. A charging management system comprising:
a reception unit configured to receive a request related to use of a charging device by a mobile body capable of being charged; and
a processing unit configured to perform, according to the request and a security level of the mobile body, processing related to the use of the charging device by the mobile body.

2. The charging management system according to claim 1, further comprising:
a judgement unit configured to judge, according to management information about security of the mobile body, the security level of the mobile body; and
a determination unit configured to determine, according to the security level of the mobile body, a parameter related to charging of the mobile body,
wherein the processing unit performs, according to the request and the determined parameter, the processing related to the use of the charging device by the mobile body.

3. The charging management system according to claim 2, wherein
the determination unit is configured to
determine, as a first range, a distance range to the charging device available to the mobile body when the security level of the mobile body is a first level, and
determine, as a second range wider than the first range, the distance range to the charging device available to the mobile body when the security level of the mobile body is a second level higher than the first level, and
the processing unit is configured to
notify the mobile body of information about the charging device present in the first range when the distance range is determined as the first range, and
notify the mobile body of information about the charging device present in the second range when the distance range is determined as the second range.

4. The charging management system according to claim 2, wherein
the determination unit is configured to
determine, as a first time, a time during which the mobile body is allowed to reserve the charging device when the security level of the mobile body is a first level, and
determine, as a second time longer than the first time, the time during which the mobile body is allowed to reserve the charging device when the security level of the mobile body is a second level higher than the first level, and
the processing unit is configured to
notify the mobile body of information about the first time when the time is determined as the first time, and
notify the mobile body of information about the second time when the time is determined as the second time.

5. The charging management system according to claim 2, wherein
the determination unit is configured to
determine, as a first speed, a charging speed of the charging device when the security level of the mobile body is a first level, and
determine, as a second speed higher than the first speed, the charging speed of the charging device when the security level of the mobile body is a second level higher than the first level, and
the processing unit is configured to
control the charging device to charge the mobile body at the first speed when the charging speed is determined as the first speed, and
control the charging device to charge the mobile body at the second speed when the charging speed is determined as the second speed.

6. The charging management system according to claim 2, wherein
the determination unit is configured to
determine, as a first rate, a discount rate of a usage fee of the charging device by the mobile body when the security level of the mobile body is a first level, and
determine, as a second rate larger than the first rate, the discount rate of the usage fee of the charging device by the mobile body when the security level of the mobile body is a second level higher than the first level, and
the processing unit is configured to
notify the mobile body of an amount of money obtained by a discount of the first rate when the discount rate is determined as the first rate, and
notify the mobile body of an amount of money obtained by a discount of the second rate when the discount rate is determined as the second rate.

7. The charging management system according to claim 2, wherein the management information about the security of the mobile body includes at least one of a version of software installed in the mobile body, presence or absence of security monitoring in the mobile body, presence or absence of a security breach history in the mobile body, a number of times of the security breach history in the mobile body, or information about freshness of the security breach history in the mobile body.

8. The charging management system according to claim 2, wherein
the judgement unit is configured to judge, according to management information about security of a plurality of mobile bodies, security levels of the plurality of mobile bodies,
the determination unit is configured to adjust, according to the determined security levels of the plurality of mobile bodies, parameters related to charging of the plurality of mobile bodies, and
the processing unit is configured to perform, by using the adjusted parameters of the plurality of mobile bodies, processing related to the use of the charging device by the plurality of mobile bodies.

9. A charging management system comprising:
an adjustment unit configured to adjust, according to priorities of a plurality of mobile bodies each capable of being charged, parameters related to charging of the plurality of mobile bodies when power supply and demand are tight; and
a processing unit configured to perform, by using the adjusted parameters of the plurality of mobile bodies, processing related to use of a charging device by the plurality of mobile bodies.

10. The charging management system according to claim 9, further comprising a judgement unit configured to judge, according to management information about security of the plurality of mobile bodies, the priorities of the plurality of mobile bodies,
wherein the adjustment unit is configured to adjust, according to the judged priorities of the plurality of mobile bodies, the parameters related to the charging of the plurality of mobile bodies when the power supply and the demand are tight.

11. A charging management method comprising:
determining, according to a security level of a mobile body capable of being charged, a parameter related to charging of the mobile body; and
performing, by using the determined parameter, processing related to use of a charging device by the mobile body.

12. The charging management method according to claim 11, further comprising judging, according to management information about security of the mobile body, the security level of the mobile body,
wherein the determining includes determining, according to the judged security level, the parameter related to the charging of the mobile body.

13. A charging management method comprising:
adjusting, according to priorities of a plurality of mobile bodies each capable of being charged, parameters related to charging of the plurality of mobile bodies when power supply and demand are tight; and
performing, by using the adjusted parameters of the plurality of mobile bodies, processing related to use of a charging device by the plurality of mobile bodies.

14. The charging management method according to claim 13, further comprising judging, according to management information about security of the plurality of mobile bodies, the priorities of the plurality of mobile bodies,
wherein the adjusting includes adjusting, according to the judged priorities of the plurality of mobile bodies, the parameters related to the charging of the plurality of mobile bodies when the power supply and the demand are tight.
